# EUROPEAN PATENT APPLICATION

(11) **EP 4 722 116 A1**
(43) Date of publication of application: **08.04.2026**
(21) Application number: 24815366.0
(22) Date of filing: 23.05.2024
(51) Int. Cl.: B65D 1/02, B29C 49/02, B29C 49/06, B29C 49/22, B65D 23/02

(54) **DOUBLE CONTAINER AND MOLDING SYSTEM**

(30) Priority: 29.05.2023 JP 2023087819; 04.08.2023 JP 2023127571; 19.09.2023 JP 2023151718
(71) Applicant: KYORAKU CO., LTD., Kyoto-shi, Kyoto 602-0912 (JP)
(72) Inventor: KUNIMORI, Kentaro, Yamato-shi, Kanagawa 242-0018 (JP); MUROYA, Yosuke, Yamato-shi, Kanagawa 242-0018 (JP); TARUNO, Shinsuke, Yamato-shi, Kanagawa 242-0018 (JP)
(74) Representative: Gulde & Partner
(86) International application number: PCT/JP2024/019025
(87) International publication number: WO 2024/247882

(57) **Abstract**

An object of the present invention is to provide a double container in which, even when a container body is formed by biaxially stretch blow molding a preform configured by covering an inner preform formed by direct blow molding with an outer preform, cracking of a contact projection in a low-temperature drop test is suppressed.

According to the present invention, there is provided a double container comprising a container body, wherein the container body comprises an inner bag and an outer shell arranged to cover the inner bag, the inner bag comprises a protruding part that protrudes from an opening end of the outer shell, the protruding part is provided with a protruding cylinder and a contact projection, the contact projection is a portion arranged at a position to contact on the opening end and protruding radially outward from the protruding cylinder, the contact projection has an upper wall and a lower wall extending radially outward from the protruding part, the upper wall is arranged closer to an opening end of the inner bag than the lower wall, and a reinforcing part for suppressing rotation of the upper wall with respect to the lower wall is provided.

## Description

### [Technical Field]

### (First to Second Aspects)

The present invention relates to a double container.

### (Third Aspect)

The present invention relates to a molding system suitable for manufacturing a container body of a double container.

### [Background Art]

### (First to Third Aspects)

Conventionally, a double container including a container body having an outer shell and an inner bag is known. For example, PTLs 1 and 2 disclose a method for manufacturing a double container including a step of manufacturing a container body having an inner bag and an outer shell covering the inner bag by biaxially stretch blow molding a preform configured by covering an inner preform with an outer preform.

### (First Aspect)

In the container body of PTL 1, the inner bag includes a protruding part protruding from an opening end of the outer shell, and the protruding part is provided with a contact projection that contacts the opening end of the outer shell.

### (Second Aspect)

In the configuration of PTL 1, a mouth-part mounting member to be mounted on a mouth part of the container body includes a main body part and a band part, and by removing the band part that engages with the outer shell, it becomes possible to rotate the main body part engaging with the inner bag together with the inner bag to pull out the inner bag.

### [Citation List]

### [Patent Literature]

[PTL 1] JP-A-2023-26868
[PTL 2] JP-A-2019-10741

### [Summary of Invention]

### [Technical Problem]

### (First Aspect)

When the present inventor conducted a drop test at a low temperature on a double container having a container body with a configuration similar to that of PTL 1, it was found that when an inner preform was formed by direct blow molding, cracking was likely to occur at a contact projection.

The present invention has been made in view of such circumstances, and provides a double container in which, even when a container body is formed by biaxially stretch blow molding a preform configured by covering an inner preform, which is formed by direct blow molding, with an outer preform, the occurrence of cracking in a contact projection in a low-temperature drop test is suppressed.

### (Second Aspect)

By the way, in the configuration of PTL 1, an operation of removing the band part of the mouth-part mounting member is required before pulling out the inner bag, and it is desired to enable the inner bag to be pulled out with a simpler operation. Therefore, a configuration is conceivable in which a mouth-part mounting member that engages with the inner bag in the circumferential direction and the axial direction is adopted without providing a portion that engages with the outer shell, and this mouth-part mounting member is rotated to pull out the inner bag.

However, in such a configuration, if the mouth-part mounting member is inadvertently rotated, the inner bag also rotates together with the mouth-part mounting member, and as a result, there is a risk that a problem may arise in which the inner bag lifts up from the container body.

The present invention has been made in view of such circumstances, and provides a double container capable of suppressing the lifting of an inner bag from a container body due to unintentional rotation of the inner bag.

### (Third Aspect)

In PTL 2, an inner preform and an outer preform prepared separately are stacked, and the stack is heated and subjected to biaxial stretch blow molding, but it is not easy to perform such a process efficiently and in a space-saving manner.

The present invention has been made in view of such circumstances, and provides a molding system capable of efficiently manufacturing a container body of a double container in a space-saving manner.

### [Solution to Problem]

### (First Aspect)

According to the present invention, the following invention is provided.
[1] A double container, comprising a container body, wherein the container body comprises an inner bag and an outer shell arranged to cover the inner bag, the inner bag comprises a protruding part that protrudes from an opening end of the outer shell, the protruding part is provided with a protruding cylinder and a contact projection, the contact projection is a portion that is arranged at a position to contact the opening end and that protrudes radially outward from the protruding cylinder, the contact projection has an upper wall and a lower wall that extend radially outward from the protruding part, the upper wall is arranged on a side closer to an opening end of the inner bag than the lower wall, and a reinforcing part that suppresses rotation of the upper wall with respect to the lower wall is provided.
[2] The double container according to [1], wherein the contact projection comprises a plurality of contact protrusions arranged along a circumferential direction, an intermediate portion is provided between the plurality of contact protrusions, the intermediate portion is a portion in which an amount of protrusion from the protruding cylinder is smaller than that of the contact protrusion, or which does not protrude from the protruding cylinder, and the reinforcing part is constituted by the intermediate portion.
[3] The double container according to [2], wherein the number of the contact protrusions is 4 or 8.
[4] The double container according to any one of [1] to [3], wherein the protruding part is provided with an engagement part for mounting a mouth-part mounting member at a position closer to the opening end of the inner bag than the contact projection.
[5] The double container according to any one of [1] to [4], wherein the container body is a molded body manufactured by biaxially stretch blow molding a preform configured by covering an inner preform, which is formed by direct blow molding, with an outer preform.

### (Second Aspect)

According to the present invention, the following invention is provided.
[1] A double container, comprising a container body, wherein the container body comprises an inner bag and an outer shell arranged to cover the inner bag, one of the inner bag and the outer shell comprises a protruding ridge, and the other of the inner bag and the outer shell comprises a groove, the protruding ridge and the groove are configured to be engageable by relative rotation of the inner bag and the outer shell in one direction, and to be disengageable by relative rotation of the inner bag and the outer shell in the other direction, the protruding ridge and the groove are engaged such that the protruding ridge interferes with a side wall of the groove, and assuming that a width of the protruding ridge and a width of the groove in a natural state at a portion where the protruding ridge and the side wall interfere are W1 and W2, respectively, W1 > W2 is satisfied.
[2] The double container according to [1], wherein the protruding ridge is provided on an outer peripheral surface of the inner bag, and the groove is provided on an inner peripheral surface of the outer shell.
[3] The double container according to [2], wherein a cam rail is provided on the inner peripheral surface of the outer shell, a lower surface of the protruding ridge and an upper surface of the cam rail are inclined so as to approach the opening end side of the container body as proceeding counterclockwise when viewed from the opening end side of the container body, and when the inner bag is rotated counterclockwise, the inner bag is configured to move in a direction of coming out from the container body by an action of a cam mechanism constituted by the protruding ridge and the cam rail.
[4] The double container according to any one of [1] to [3], wherein a value of (W1 - W2) is 0.05 to 0.5 mm.
[5] The double container according to any one of [1] to [4], wherein the protruding ridge is tapered toward a tip in a longitudinal direction.

### (Third Aspect)

According to the present invention, the following invention is provided.
[1] A molding system, wherein the molding system comprises a transfer device, an injection molding device, a preform supply device, a heating device, a blow molding device, and a container take-out device, the transfer device is configured to convey a transfer core along a circulation path, the preform supply device is configured to supply a preform, which is configured by covering an inner preform with an outer preform, to the transfer core, one of the outer preform and the inner preform is injection-molded by the injection molding device, and the other of the outer preform and the inner preform is supplied from an outside, the preform supply device, the heating device, the blow molding device, and the take-out device are arranged along the circulation path, the heating device is configured to heat the preform, the blow molding device is configured to manufacture a container body by biaxially stretch blow molding the heated preform, and the take-out device is configured to remove the container body from the transfer core.
[2] The molding system according to [1], wherein the preform supply device comprises an inner preform supply device and an outer preform supply device, the inner preform supply device is configured to mount the inner preform supplied from the outside on the transfer core after the container body has been removed, and the outer preform supply device is configured to cover the inner preform in a state of being mounted on the transfer core with the outer preform received from the injection molding device.
[3] The molding system according to [1], wherein the preform supply device comprises an inner preform supply device and an outer preform supply device, the outer preform supply device is configured to hold the outer preform received from the injection molding device, the inner preform supply device is configured to form the preform by inserting the inner preform supplied from the outside into the outer preform in a state of being held by the outer preform supply device, and the outer preform supply device is configured to mount the preform on the transfer core.

### [Advantageous Effects of Invention]

### (First Aspect)

When an inner preform is formed by direct blow molding, unlike the case where it is formed by injection molding, a contact projection is not formed integrally but has a shape including an upper wall and a lower wall. Then, this shape is inherited almost as it is by a container body formed by performing biaxial stretch blow molding, and when a container body is formed by biaxially stretch blow molding a preform configured by covering an inner preform, which is formed by direct blow molding, with an outer preform, the contact projection has a shape including an upper wall and a lower wall, and in a low-temperature drop test, it was found that when a force in a direction of rotating the upper wall with respect to the lower wall is applied, cracking is likely to occur in the contact projection. Then, based on this finding, the present inventor found that by providing a reinforcing part that suppresses the rotation of the upper wall with respect to the lower wall, it is possible to suppress the occurrence of cracking in the contact projection, and completed the present invention.

### (Second Aspect)

In the configuration of the present invention, a protruding ridge and a groove are engaged such that the protruding ridge interferes with a side wall of the groove. According to such a configuration, a frictional force acting between the protruding ridge and the side wall of the groove increases, and a torque required to disengage the protruding ridge and the groove increases, so that unintentional rotation of the inner bag is suppressed.

### (Third Aspect)

In the molding system of the present invention, since a preform configured by covering an inner preform with an outer preform injection-molded by an injection molding device is configured to be supplied to a transfer core, it is not necessary to supply the outer preform from the outside, and efficient manufacturing is possible. Further, since a preform supply device, a heating device, a blow molding device, and a take-out device are arranged along a circulation path, the molding system can be configured in a space-saving manner. Therefore, according to the present invention, a molding system capable of efficiently manufacturing a container body of a double container in a space-saving manner is provided.

### [Brief Description of Drawings]

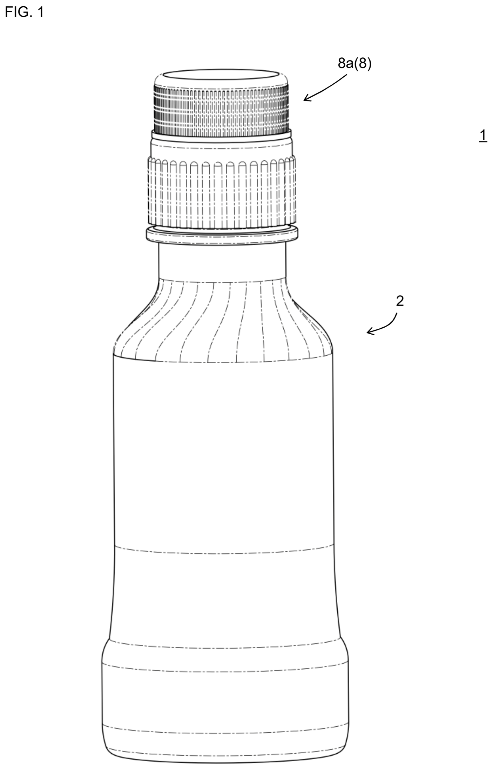

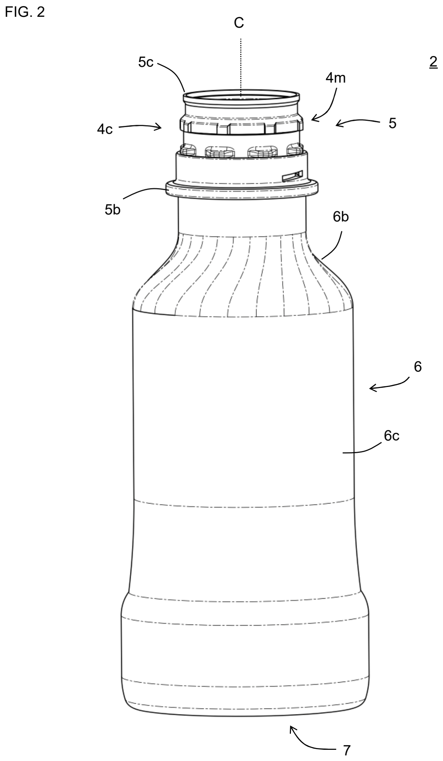

(First to Second Aspects) Fig. 1 is a perspective view of a double container 1 according to a first embodiment of the present invention. The one-dot chain line in the figure represents a boundary line where the curvature of the surface constituting the surface shape changes. The same applies to the other figures.
(First Aspect) Fig. 2 is a perspective view of a container body 2 in Fig. 1.
Fig. 3 is an exploded perspective view of the vicinity of a mouth part 5 of Fig. 2.
Fig. 4A is a longitudinal cross-sectional view of the container body 2 of Fig. 2 passing through the center of the mouth part 5, Fig. 4B is an end view of a cross section taken along the line B-B in Fig. 4A, and Fig. 4C is an enlarged view of a region C in Fig. 4A.
Fig. 5 is a perspective view showing a state in which an inner preform 14 and an outer preform 13 are separated.
Fig. 6 is a perspective view of a preform 15 configured by covering the inner preform 14 with the outer preform 13.
Fig. 7 is an exploded perspective view corresponding to Fig. 3 of a double container 1 according to a second embodiment of the present invention.
Fig. 8 is an end view corresponding to Fig. 4B of the double container 1 of Fig. 7.
Fig. 9 is a perspective view of an inner preform 14 used in the second embodiment of the present invention.
(Second Aspect) Fig. 10 is a perspective view of the container body 2 in Fig. 1.
Fig. 11 is an exploded perspective view of the vicinity of the mouth part 5 of Fig. 10.
Fig. 12 is a perspective view of the vicinity of an opening end of an outer shell 3.
Fig. 13A is a front view of the vicinity of the mouth part 5 of the container body 2 of Fig. 10, Fig. 13B is a cross-sectional view taken along the line B-B in Fig. 13A, Fig. 13C is an enlarged view of a region C in Fig. 13B, and Fig. 13D is an exploded view of Fig. 13C.
Fig. 14 is an exploded view of Fig. 13A.
Fig. 15 is a longitudinal cross-sectional view of the double container 1 of Fig. 1.
Fig. 16 is a perspective view showing a state in which the inner preform 14 and the outer preform 13 are separated.
Fig. 17 is a perspective view of a preform 15 configured by covering the inner preform 14 with the outer preform 13.
(Third Aspect) Fig. 18 is a perspective view of a double container 1 according to a first embodiment of the present invention.
Fig. 19 is a perspective view of a container body 2 in Fig. 18.
Fig. 20 is a longitudinal cross-sectional view of the vicinity of a mouth part 5 of the container body 2 of Fig. 19.
Fig. 21 is a perspective view of an inner preform 14 and an outer preform 13.
Fig. 22 is a perspective view of a preform 15.
Fig. 23 is a plan view of a molding system 50 according to the first embodiment of the present invention. Figs. 23 to 33 are schematic views for explanation, and dimensions and shapes are not necessarily accurate.
Figs. 24A and 24B are views of a portion including a take-out device 54 and an inner preform supply device 57 as seen from the front side in a conveyance direction of a transfer core 51a, and show a process in which the take-out device 54 removes a container body 2 from the transfer core 51a.
Figs. 25A and 25B are views of the same portion as in Fig. 24A as seen from the same direction, and show a process in which the inner preform supply device 57 mounts an inner preform 14 on the transfer core 51a.
Figs. 26A and 26B are views of a portion including an outer preform supply device 58 as seen from the rear side in the conveyance direction of the transfer core 51a, and show a process in which the outer preform supply device 58 receives an outer preform 13 from an injection molding device 52.
Figs. 27A to 27C are views of the same portion as in Fig. 26A as seen from the same direction, and show a process in which the outer preform 13 is mounted on the transfer core 51a from the outer preform supply device 58.
Figs. 28A and 28B are views of a portion including an inner preform supply device 57 of a molding system 50 according to a second embodiment of the present invention as seen from the front side in the conveyance direction of the transfer core 51a, and show a process in which the inner preform supply device 57 mounts an inner preform 14 on the transfer core 51a.
Fig. 29 is a plan view of a molding system 50 according to a third embodiment of the present invention.
Figs. 30A and 30B are views of a portion including a preform supply device 53 as seen from the rear side in the conveyance direction of the transfer core 51a, and show a process of forming a preform 15 by inserting an inner preform 14 into an outer preform 13.
Figs. 31A and 31B are views of the same portion as in Fig. 30A as seen from the same direction, and show a process of mounting the preform 15 on the transfer core 51a.
Figs. 32A and 32B are views of a portion including a preform supply device 53 of a molding system 50 according to a fourth embodiment of the present invention as seen from the rear side in the conveyance direction of the transfer core 51a, and show a process of forming a preform 15 by inserting an inner preform 14 into an outer preform 13.
Figs. 33A and 33B are views of the same portion as in Fig. 32A as seen from the same direction, and show a process of mounting the preform 15 on the transfer core 51a.

### [Description of Embodiments]

Hereinafter, embodiments of the present invention will be described. Various features shown in the embodiments described below can be combined with each other. Further, an invention is independently established for each feature. Furthermore, among the following embodiments, elements not defined in the claims are optional elements and can be omitted. An arbitrary number (for example, one or two) of "0"s may be added to the end of a numerical value disclosed in the following description. For example, "1.40" or "1.400" may be obtained by adding one or two "0"s after "1.4".

### (First Aspect)

### 1. First Embodiment

### 1-1. Configuration of double container 1

### <Basic Configuration>

As shown in Fig. 1, a double container 1 according to a first embodiment of the present invention includes a container body 2 and a mouth-part mounting member 8.

As shown in Figs. 2 to 3, the container body 2 includes a mouth part 5, a body part 6, and a bottom part 7. The mouth part 5 is a tubular (preferably cylindrical) portion having an opening end 5c. The opening end 5c is an opening end of the container body 2 and also an opening end of an inner bag 4. The mouth part 5 includes an engagement part 4m to which the mouth-part mounting member 8 can be mounted. The mouth-part mounting member 8 is a cap 8a in the present embodiment, but may be a pump. The mouth part 5 is provided with a flange 5b. The flange 5b can be used to support the mouth part 5 when the mouth-part mounting member 8 is mounted on the mouth part 5.

The body part 6 is arranged adjacent to the mouth part 5 on a side farther from the opening end 5c than the mouth part 5. The body part 6 has an outer diameter (in this specification, "outer diameter" means an equivalent circle diameter when a cross section is not circular) larger than that of the mouth part 5. The body part 6 is tubular, and the bottom part 7 is provided at a lower end of the body part 6 and closes the lower end of the body part 6. The body part 6 includes a shoulder part 6b whose outer diameter increases as the distance from the mouth part 5 increases. Further, the body part 6 includes a main body part 6c on the bottom part 7 side of the shoulder part 6b. The main body part 6c has, for example, a shape in which an outer diameter is substantially constant toward the bottom part 7, or a shape in which the diameter is reduced toward the bottom part 7.

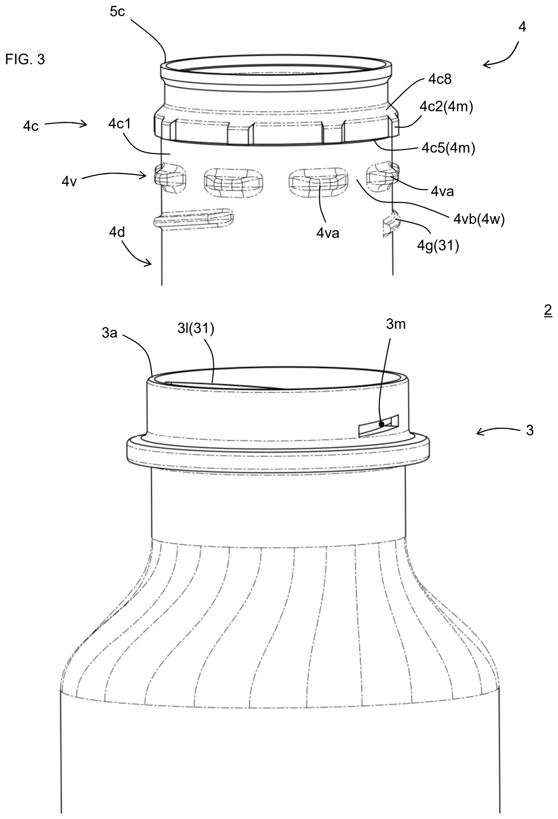

As shown in Fig. 3, the container body 2 includes an inner bag 4 and an outer shell 3 arranged so as to cover the inner bag 4. In the inner bag 4, an inner bag body 4d other than a protruding part 4c is accommodated in the outer shell 3. In the following description, portions of the inner bag 4 corresponding to the mouth part 5, the body part 6, and the bottom part 7 of the container body 2 are referred to as a mouth part 5, a body part 6, and a bottom part 7 of the inner bag 4, respectively. The same applies to the outer shell 3.

### <Detailed Structure of outer shell 3 and inner bag 4>

As shown in Figs. 2 to 4, the inner bag 4 includes a protruding part 4c that protrudes from an opening end 3a of the outer shell 3. The protruding part 4c includes a protruding cylinder 4c1, an engagement projection 4c2, an annular projection 4c5, and a contact projection 4v.

The annular projection 4c5 engages with the mouth-part mounting member 8 in an axial direction. The engagement projection 4c2 engages with the mouth-part mounting member 8 in a circumferential direction. The engagement projection 4c2 and the annular projection 4c5 constitute an engagement part 4m. The engagement part 4m is arranged at a position closer to the opening end 5c of the inner bag 4 than the contact projection 4v. In this specification, the "axial direction" is a direction in which a central axis C of the mouth part 5 extends, in other words, a direction in which the inner bag 4 is pulled out from the container body 2. The "circumferential direction" is a direction of rotation about the central axis C of the mouth part 5, in other words, a direction of rotating the inner bag 4 with respect to the outer shell 3 in the mouth part 5.

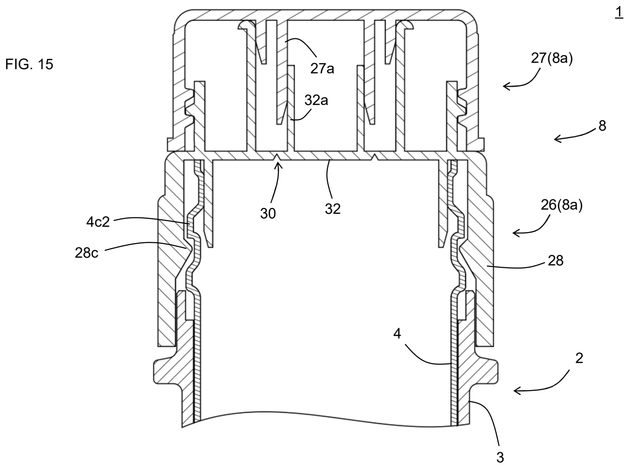

It is preferable that a plurality of (eight in the present embodiment) engagement projections 4c2 are provided so as to be separated in the circumferential direction. The engagement projection 4c2 is disposed on the annular projection 4c5 and is provided so as to protrude radially outward from the annular projection 4c5. The annular projection 4c5 and the engagement projection 4c2 are provided with a tapered surface 4c8 on their upper surfaces. This makes it easier for an annular projection 28c (shown in Fig. 15) provided on the mouth-part mounting member 8 to get over the annular projection 4c5 and the engagement projection 4c2.

The contact projection 4v is a portion arranged at a position to contact the opening end 3a and protruding radially outward from the protruding cylinder 4c1. The contact projection 4v contacts the opening end 3a, whereby the inner bag 4 is prevented from falling into the outer shell 3. Details of the contact projection 4v will be described later.

As shown in Fig. 3, a protruding ridge (cam protrusion) 4g is provided on an outer peripheral surface of the inner bag body 4d. A lower surface of the protruding ridge 4g is inclined so as to approach the opening end 5c as proceeding counterclockwise when viewed from the opening end 5c side of the mouth part 5. Further, a cam rail 31 and a groove 3m are provided on an inner peripheral surface of the outer shell 3. The groove 3m is provided such that a lower surface of the groove 3m is continuous with an upper surface of the cam rail 31.

In a state before the inner bag 4 is pulled out from the container body 2, the lower surface of the protruding ridge 4g is in contact with the upper surface of the cam rail 31. The protruding ridge 4g and the cam rail 31 constitute a cam mechanism 31. When the inner bag 4 is rotated counterclockwise, the inner bag 4 moves in a direction of coming out from the container body 2 by the action of the cam mechanism 31. At this time, the inner bag 4 is twisted and reduced in diameter.

### <Pulling out of inner bag 4>

The mouth-part mounting member 8 is preferably configured to be mountable on the mouth part 5 of the container body 2 by a snap-on method, and in a state where the mouth-part mounting member 8 is put on the mouth part 5, by pressing the mouth-part mounting member 8 in the direction of the bottom part 7, the mouth-part mounting member 8 can be engaged with and mounted on the mouth part 5.

The mouth-part mounting member 8 is engaged with the mouth part 5 of the inner bag 4 in the circumferential direction and the axial direction, and is configured such that the inner bag 4 rotates with respect to the outer shell 3 along with the rotation of the mouth-part mounting member 8. Then, by the action of the cam mechanism 31 provided between the inner bag 4 and the outer shell 3, the inner bag 4 is configured to move in a direction of coming out from the container body 2 along with the rotation of the inner bag 4.

According to such a configuration, by rotating the mouth-part mounting member 8, the inner bag 4 can be moved in a direction of coming out from the container body 2 while being twisted, and thereafter, by pulling the mouth-part mounting member 8, the inner bag 4 can be pulled out from the container body 2. Note that the inner bag 4 may be separated from the container body 2 by pulling the inner bag 4 in the axial direction without twisting it. In that case as well, according to the configuration of the present invention, a force required to separate the inner bag 4 is reduced.

### <Details of contact projection 4v>

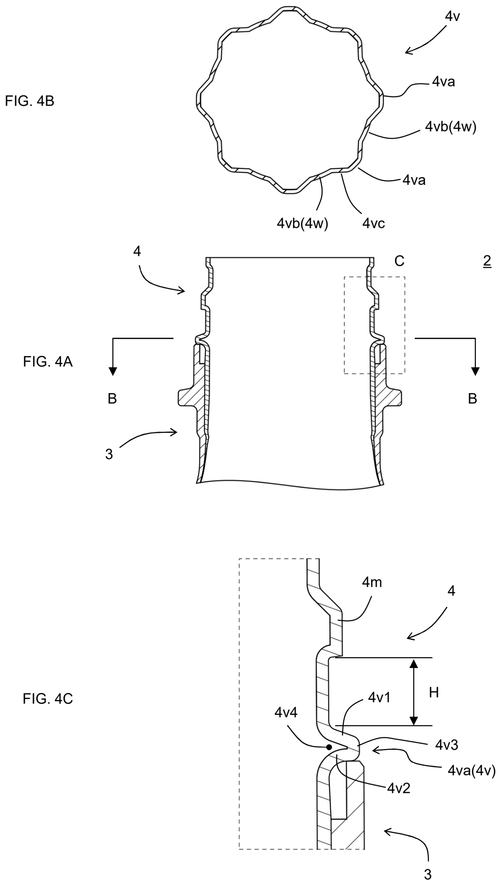

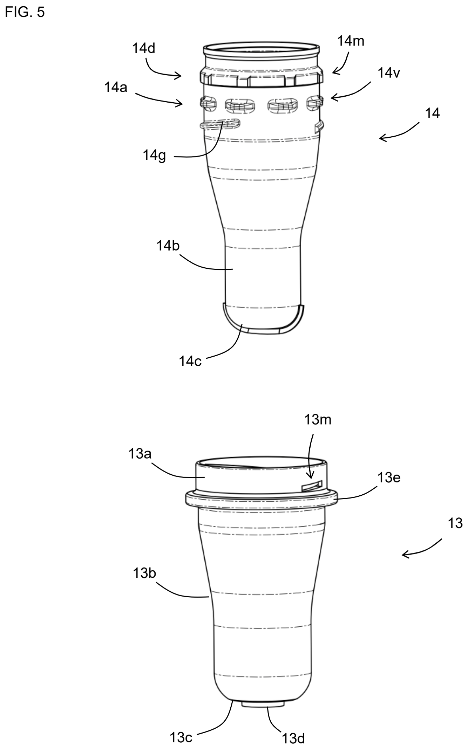

As will be described later, the container body 2 is preferably a molded body manufactured by biaxially stretch blow molding a preform 15 (shown in Figs. 5 to 6) configured by covering an inner preform 14, which is formed by direct blow molding, with an outer preform 13. When the inner preform 14 is formed by direct blow molding, unlike the case where it is formed by injection molding, the contact projection 4v is not formed integrally, but has a shape in which an upper wall 4v1 and a lower wall 4v2 are connected at a tip 4v3, as shown in Fig. 4C. The upper wall 4v1 is arranged on a side closer to the opening end 5c of the inner bag 4 than the lower wall 4v2. When a thickness at a root of the contact projection 4v is larger than a total thickness of the upper wall 4v1 and the lower wall 4v2, a gap 4v4 is formed between the upper wall 4v1 and the lower wall 4v2. The gap 4v4 gradually narrows toward the tip 4v3.

The low-temperature drop test of the double container 1 is performed in a state where the mouth-part mounting member 8 is mounted on the engagement part 4m. When the body part 6 of the double container 1 collides with the ground, a rotational force is applied to the mouth-part mounting member 8 such that the mouth-part mounting member 8 is swung toward the ground (in other words, the double container 1 is bent with a root of the protruding part 4c as a starting point), and the rotational force is applied to the contact projection 4v via the engagement part 4m. If the contact projection 4v is integrally formed, cracking of the contact projection 4v due to the rotational force generated at the time of dropping is unlikely to occur, but when the contact projection 4v has a configuration including the upper wall 4v1 and the lower wall 4v2, a force in a direction of rotating the upper wall 4v1 with respect to the lower wall 4v2 due to the rotational force generated at the time of dropping (in other words, a force in a direction of rotating the upper wall 4v1 about the tip 4v3 with respect to the lower wall 4v2 in the cross section of Fig. 4C) is applied, and a problem that cracking is likely to occur in the contact projection 4v is likely to occur.

In the present embodiment, in order to solve such a problem, a reinforcing part 4w that suppresses rotation of the upper wall 4v1 with respect to the lower wall 4v2 is provided. The reinforcing part 4w can have any configuration capable of suppressing the rotation of the upper wall 4v1 with respect to the lower wall 4v2.

In the present embodiment, the contact projection 4v includes a plurality of contact protrusions 4va arranged along the circumferential direction. An intermediate portion 4vb is provided between the plurality of contact protrusions 4va. The intermediate portion 4vb is a portion in which an amount of protrusion from the protruding cylinder 4c1 is smaller than that of the contact protrusion 4va, or a portion that does not protrude from the protruding cylinder 4c1. The reinforcing part 4w is constituted by the intermediate portion 4vb. In the present embodiment, the intermediate portion 4vb is a portion that does not protrude from the protruding cylinder 4c1. Since the intermediate portion 4vb is less likely to be deformed than the contact protrusion 4va, deformation of the contact protrusion 4va is suppressed by providing the intermediate portion 4vb.

The contact projection 4v is configured by a plurality of contact protrusions 4va being formed intermittently (preferably at equal intervals) so as to be separated from each other in the circumferential direction. The number of the contact protrusions 4va is, for example, 2 to 16, preferably 4 or 8, and more preferably 8. When the inner preform 14 is formed by direct blow molding, it is necessary to demold the inner preform 14 from split molds for molding, and considering demoldability, the number of the contact protrusions 4va is preferably 4 or 8. Further, the larger the number of the contact protrusions 4va, the higher the effect of suppressing cracking of the contact projection 4v, so the number of the contact protrusions 4va is more preferably 8. It is preferable that the contact protrusion 4va and the intermediate portion 4vb are connected via an inclined surface 4vc. The inclined surface 4vc is preferably provided so as not to become an undercut at the time of demolding from split molds that open and close in the left-right direction of Fig. 4B, for example. A protrusion inclination of the contact protrusion 4va (that is, an inclination of the inclined surface 4vc) may be gentler than a protrusion inclination of the engagement projection 4c2. This is because the engagement projection 4c2 preferably has a steep protrusion inclination in order to engage with the mouth-part mounting member 8 in the circumferential direction, whereas the contact protrusion 4va is provided to prevent the inner bag from falling off and does not need to engage with another member in the circumferential direction.

A ratio of the intermediate portion 4vb to a total of the contact protrusion 4va and the intermediate portion 4vb is, for example, 10 to 90%, and preferably 20 to 80% (32% in the present embodiment, 44% in the second embodiment). This value is, for example, specifically 10, 20, 30, 40, 50, 60, 70, 80, 90%, and may be a range between any two of the values exemplified here. A total of angles occupied by the intermediate portion 4vb is, for example, 60 to 300 degrees, and preferably 80 to 200 degrees (112 degrees in the present embodiment, 140 degrees in the second embodiment). This value is, for example, specifically 60, 70, 80, 90, 100, 110, 120, 130, 140, 150, 160, 170, 180, 190, 200, 250, 300 degrees, and may be a range between any two of the values exemplified here.

A vertical length H between an upper edge of the contact projection 4v and a lower edge of the engagement part 4m is, for example, 2 mm or more, and preferably 3 mm or more (3.1 mm in the present embodiment). The longer this length H, the larger the rotational force applied to the contact projection 4v tends to be, and the significance of applying the present invention becomes remarkable. This length is, for example, 2 to 20 mm, and specifically, for example, 2, 3, 4, 5, 6, 7, 8, 9, 10, 15, 20 mm, and may be a range between any two of the values exemplified here or any of them or more.

A wall thickness of the inner bag 4 at an intermediate position between the upper edge of the contact projection 4v and the lower edge of the engagement part 4m is, for example, 0.5 to 1.5 mm, and specifically, for example, 0.5, 0.6, 0.7, 0.8, 0.9, 1.0, 1.1, 1.2, 1.3, 1.4, 1.5 mm, and may be a range between any two of the values exemplified here.

### 1-2. Method for Manufacturing double container 1

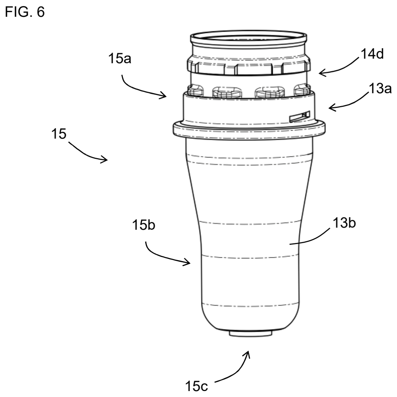

The container body 2 can be manufactured by biaxially stretch blow molding a preform 15 shown in Fig. 6. Further, the double container 1 can be manufactured by mounting the mouth-part mounting member 8 on the container body 2.

### <Configuration of inner preform 14, outer preform 13, and preform 15>

As shown in Fig. 5, the preform 15 includes an inner preform 14 that becomes the inner bag 4 and an outer preform 13 that becomes the outer shell 3.

As shown in Fig. 5, the inner preform 14 has a bottomed tubular shape, and includes a mouth part 14a, a body part 14b, and a bottom part 14c. The mouth part 14a is provided with a protruding part 14d and a protruding ridge 14g. The protruding part 14d becomes the protruding part 4c with its shape as it is without being deformed during molding. The protruding part 14d is provided with an engagement part 14m and a contact projection 14v. The engagement part 14m, the contact projection 14v, and the protruding ridge 14g become the engagement part 4m, the contact projection 4v, and the protruding ridge 4g, respectively, after molding. The bottom part 14c is provided so as to close a lower end of the body part 14b. The matters described above for the protruding part 4c, the engagement part 4m, and the contact projection 4v can also be applied to the protruding part 14d, the engagement part 14m, and the contact projection 14v, as long as they are not contrary to the gist thereof.

As shown in Fig. 5, the outer preform 13 has a bottomed tubular shape, and includes a mouth part 13a, a body part 13b, and a bottom part 13c. The bottom part 13c is provided so as to close a lower end of the body part 13b. The bottom part 13c is provided with an annular projection 13d. The mouth part 13a is provided with a flange part 13e. The mouth part 13a is provided with a groove 13m, and the groove 13m becomes the groove 3m after molding.

As shown in Fig. 6, the preform 15 can be formed by covering the inner preform 14 with the outer preform 13. In the preform 15, the mouth part 14a and the mouth part 13a face each other, and the body part 14b and the body part 13b face each other.

The mouth parts 13a and 14a become a mouth part 15a of the preform 15, the body parts 13b and 14b become a body part 15b of the preform 15, and the bottom parts 13c and 14c become a bottom part 15c of the preform 15. The body part 15b and the bottom part 15c are mainly stretched in biaxial stretch blow molding. The mouth part 15a is hardly deformed during molding and becomes the mouth part 5 of the container body 2. The contents described above for the configurations included in the mouth part 5 can also be applied to the configurations included in the mouth part 15a, as long as they are not contrary to the gist thereof.

### <Material and Manufacturing Method of inner preform 14, outer preform 13, and preform 15>

The inner preform 14 and the outer preform 13 can be formed of a thermoplastic resin such as polyester (e.g., PET) or polyolefin (e.g., polypropylene, polyethylene). The inner preform 14 and the outer preform 13 can be formed by direct blow molding or injection molding.

### <Manufacture of inner preform 14 by Direct Blow Molding>

It is preferable that the inner preform 14 is formed by direct blow molding using a tubular parison in a molten state. In direct blow molding, since it is easier to reduce the wall thickness than in injection molding, it is possible to reduce the wall thickness of the inner bag 4 by forming the inner preform 14 by direct blow molding. Further, in order to form the inner bag 4 having a multilayer structure, it is desirable that the inner preform 14 have a configuration including, in order from the inside, an inner layer, a gas barrier layer, and an outer layer, but it is not easy to form the inner preform 14 having such a configuration by multilayer injection molding, and in addition, for example, when a gate is provided in the bottom part 14c of the inner preform 14, there is a risk that a resin constituting the gas barrier layer does not reach an opening end of the inner preform 14 and gas barrier properties are deteriorated. In particular, the smaller the wall thickness of the inner preform 14, the more difficult it is for the resin to flow, and the above problem becomes remarkable. On the other hand, in direct blow molding, since molding is performed using a tubular parison having a configuration corresponding to the inner layer, the gas barrier layer, and the outer layer, it is easy to provide the gas barrier layer over the entire inner preform 14.

Preferably, the gas barrier layer is made of, for example, EVOH, and the inner layer and the outer layer are made of polyolefin (e.g., polypropylene). A repro layer may be provided on at least one of the inner layer and the outer layer. The repro layer is made of a resin containing a recycled resin, and is preferably made of a mixed resin made of the recycled resin and a virgin resin. By providing the repro layer, it is possible to reduce an environmental load and a container manufacturing cost.

### 2. Second Embodiment

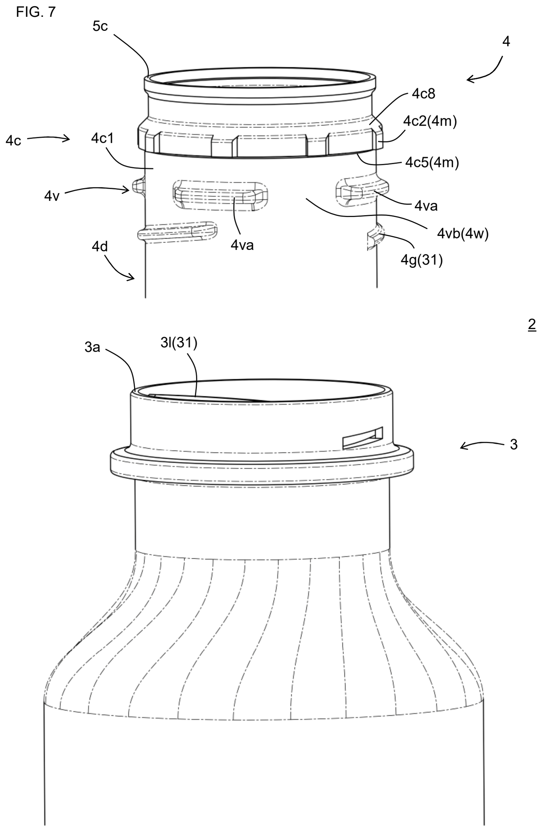

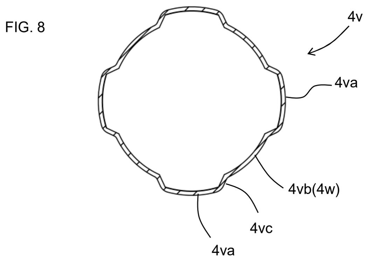

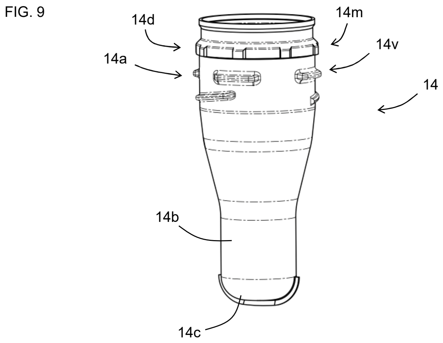

A second embodiment of the present invention will be described with reference to Figs. 7 to 9. The present embodiment is similar to the first embodiment, and the description of the first embodiment can also be applied to the present embodiment as long as it is not contrary to the gist thereof. The main difference between the present embodiment and the first embodiment is that the number of contact protrusions 4va provided on the contact projection 4v is four. Even in such a form, the intermediate portion 4vb between two adjacent contact protrusions 4va functions as the reinforcing part 4w, and cracking of the contact projection 4v can be suppressed. The container body 2 having such a structure can be manufactured using the inner preform 14 having the contact projection 14v in which the number of contact protrusions is four, as shown in Fig. 9.

### 3. Other Embodiments

In the above embodiments, the inner bag 4 was configured to be pullable out from the container body 2, but the inner bag 4 may be configured to be unpullable out from the container body 2.

In the above embodiments, the mouth-part mounting member 8 was mounted on the mouth part 5 by a snap-on method, but the mouth-part mounting member 8 may be mounted on the mouth part 5 by another method such as a screw method.

In the above embodiments, the intermediate portion 4vb is a portion that does not protrude from the protruding cylinder 4c1, but even when the intermediate portion 4vb protrudes from the protruding cylinder 4c1, if the amount of protrusion is smaller than that of the protruding cylinder 4c1, the intermediate portion 4vb can suppress the deformation of the contact protrusion 4va, so it functions as the reinforcing part 4w.

Instead of/in addition to providing the intermediate portion 4vb that functions as the reinforcing part 4w, rotation of the upper wall 4v1 with respect to the lower wall 4v2 may be suppressed by filling at least a part of the gap 4v4 with a resin. In this case, the portion filled with the resin becomes the reinforcing part 4w.

### (Second Aspect)

### 1. First Embodiment

The present embodiment is similar to the first embodiment of the first aspect, and the contents described in the first embodiment of the first aspect can also be applied to the present embodiment as long as they are not contrary to the gist thereof. Hereinafter, differences will be mainly described.

### 1-1. Configuration of double container 1

### <Detailed Structure of outer shell 3 and inner bag 4>

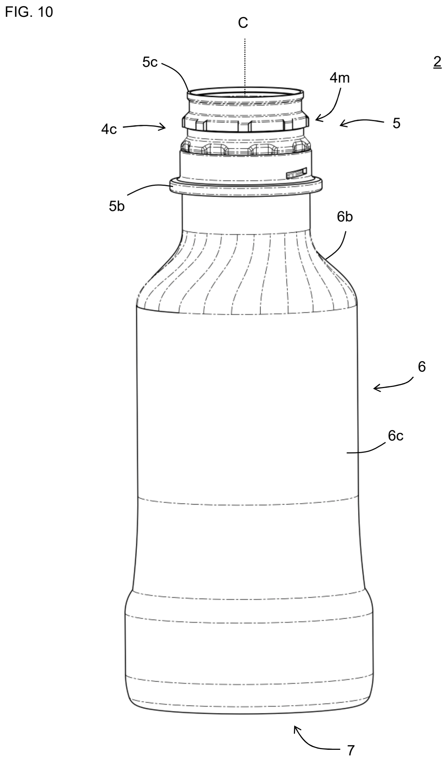

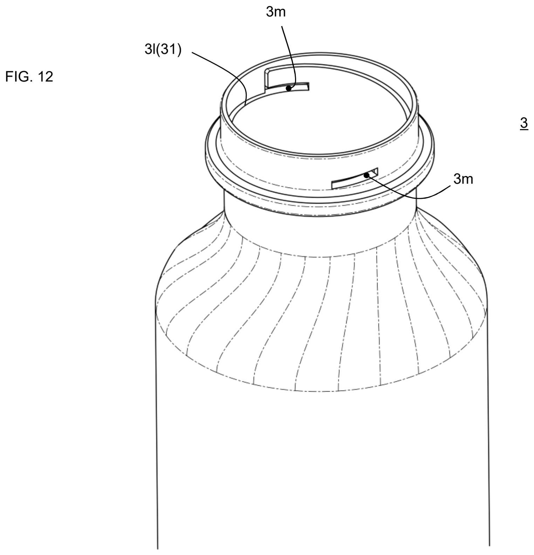

As shown in Figs. 10 to 13, the inner bag 4 includes a protruding part 4c that protrudes from an opening end 3a of the outer shell 3. The protruding part 4c includes a protruding cylinder 4c1, an engagement projection 4c2, an annular projection 4c5, and a contact projection 4v.

The contact projection 4v preferably includes a plurality of contact protrusions 4va arranged along a circumferential direction. An intermediate portion 4vb is provided between the plurality of contact protrusions 4va. The intermediate portion 4vb is a portion in which an amount of protrusion from the protruding cylinder 4c1 is smaller than that of the contact protrusion 4va, or a portion that does not protrude from the protruding cylinder 4c1. Since the intermediate portion 4vb is less likely to be deformed than the contact protrusion 4va, deformation of the contact protrusion 4va is suppressed by providing the intermediate portion 4vb.

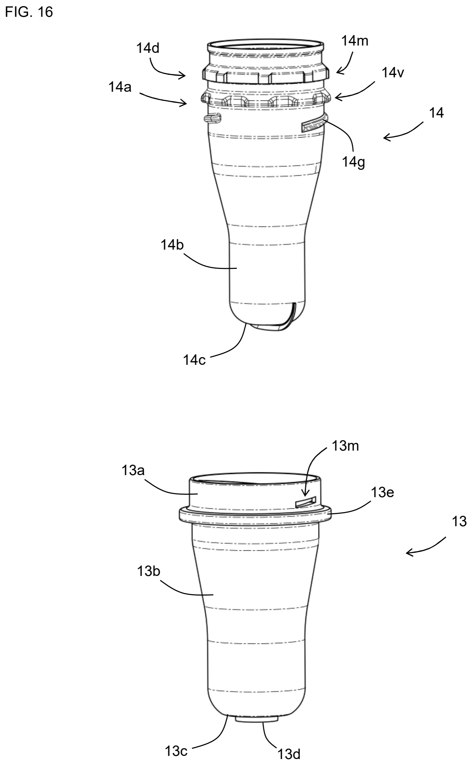

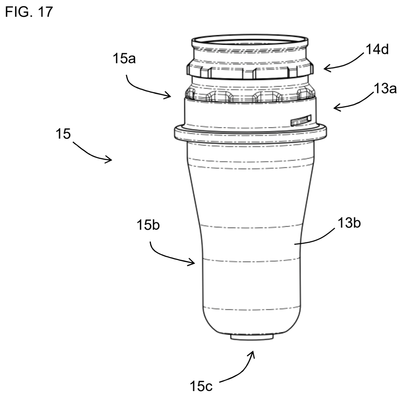

The container body 2 is preferably a molded body manufactured by biaxially stretch blow molding a preform 15 (shown in Figs. 16 to 17) configured by covering an inner preform 14, which is formed by direct blow molding, with an outer preform 13. When the inner preform 14 is formed by direct blow molding, the strength of the contact projection 4v is likely to be insufficient, and cracking is likely to occur in the contact projection 4v due to a drop test of the double container 1, but by providing the intermediate portion 4vb in the contact projection 4v, deformation of the contact protrusion 4va is suppressed, and cracking of the contact projection 4v is suppressed.

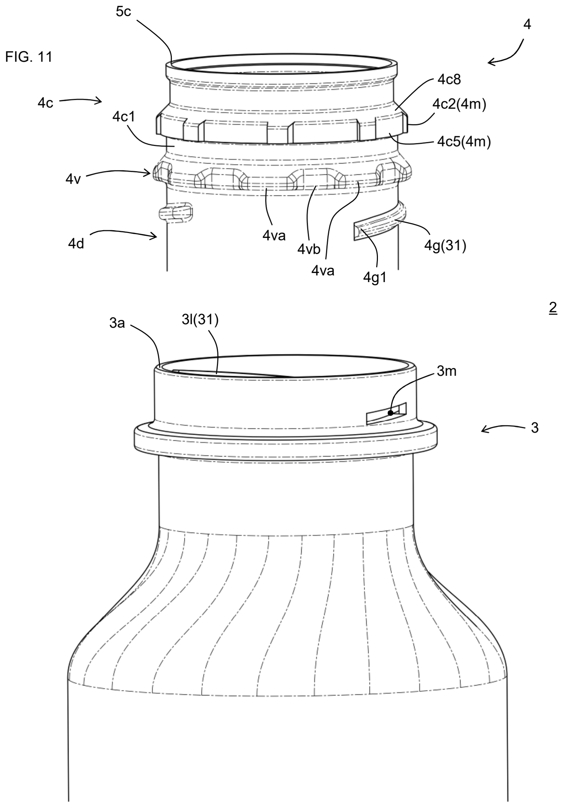

As shown in Fig. 11, a protruding ridge 4g is provided on an outer peripheral surface of the inner bag 4 (more specifically, the inner bag body 4d). A lower surface of the protruding ridge 4g is inclined so as to approach the opening end 5c as proceeding counterclockwise when viewed from the opening end 5c side of the mouth part 5.

As shown in Figs. 11 to 12, a cam rail 31 and a groove 3m are provided on an inner peripheral surface of the outer shell 3. The groove 3m is provided such that a lower surface of the groove 3m is continuous with an upper surface of the cam rail 31. An upper surface of the cam rail 31 and the lower surface of the groove 3m are inclined so as to approach the opening end 3a as proceeding counterclockwise when viewed from the opening end 3a side. The protruding ridge 4g and the groove 3m are configured to be engageable by relative rotation of the inner bag 4 and the outer shell 3 in one direction, and to be disengageable by relative rotation of the inner bag 4 and the outer shell 3 in the other direction. In the present embodiment, when viewed from the opening end 3a side, by rotating the inner bag 4 clockwise with respect to the outer shell 3, the protruding ridge 4g can be inserted into the groove 3m to be engaged, and by rotating the inner bag 4 counterclockwise with respect to the outer shell 3, the protruding ridge 4g can be disengaged from the groove 3m to be disengaged.

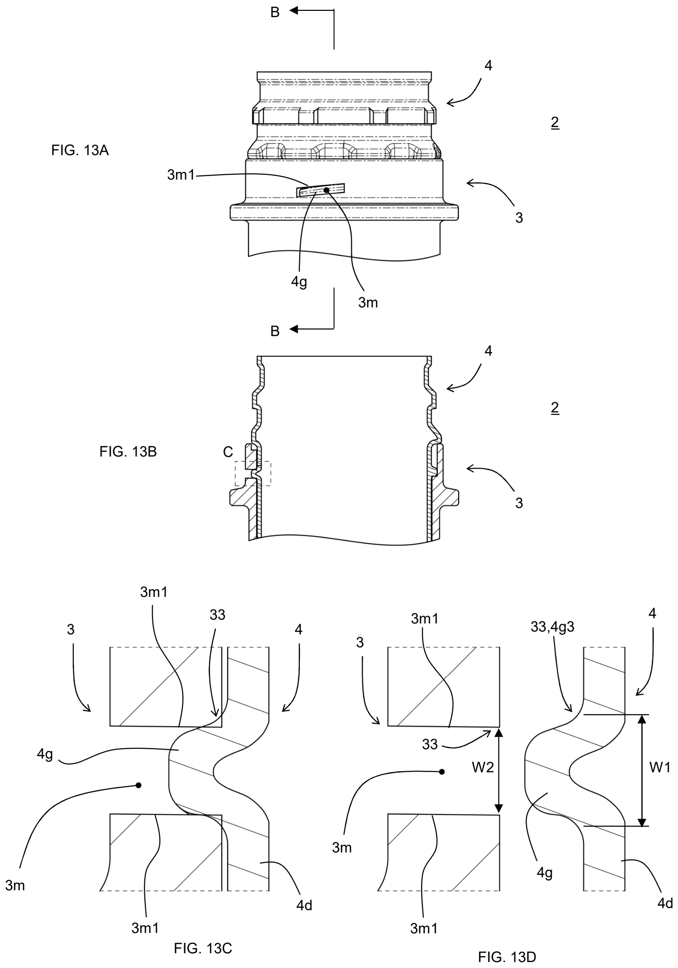

A width of the protruding ridge 4g is slightly larger than a width of the groove 3m. For this reason, the protruding ridge 4g and the groove 3m engage such that the protruding ridge 4g interferes with a side wall 3m1 of the groove 3m. More specifically, as shown in Figs. 13C to 13D, assuming that a width of the protruding ridge 4g and a width of the groove 3m in a natural state (a state in which no external force is applied) at a portion 33 where the protruding ridge 4g and the side wall 3m1 interfere are W1 and W2, respectively, W1 > W2 is satisfied. W1 and W2 are lengths in a direction in which a central axis C of the mouth part 5 extends.

In this case, when the inner bag 4 is rotated with respect to the outer shell 3 to insert the protruding ridge 4g into the groove 3m, the protruding ridge 4g is pushed into the groove 3m such that the protruding ridge 4g and the side wall 3m1 push each other away. In Fig. 13C, for convenience of illustration, the protruding ridge 4g and the groove 3m are shown without being deformed, but actually, in a state where the protruding ridge 4g is pushed into the groove 3m, one or both of the protruding ridge 4g and the groove 3m are in a state of being deformed from a natural state, and the protruding ridge 4g and the side wall 3m1 are pressed against each other by a restoring force, so that a frictional force increases. As shown in Fig. 13D, when the protruding ridge 4g is hollow, the protruding ridge 4g is more likely to be deformed than the groove 3m, so when the protruding ridge 4g is pushed into the groove 3m, the protruding ridge 4g is likely to be preferentially deformed. In order to disengage the protruding ridge 4g and the groove 3m from this state, it is necessary to apply a torque exceeding the frictional force acting between the protruding ridge 4g and the side wall 3m1. For this reason, unintentional rotation of the inner bag 4 before the contents are used up is suppressed. Further, the magnitude of the torque required to rotate the inner bag 4 can be adjusted by changing the degree of interference between the protruding ridge 4g and the side wall 3m1.

In addition, instead of causing the protruding ridge 4g and the side wall 3m1 to interfere with each other, for example, it is also conceivable to suppress unintentional rotation of the inner bag 4 by locking a convex part provided on the inner bag 4 with a locking part provided on the outer shell 3, but in this case, if a force is applied to the convex part, there is a risk that the convex part is damaged and a pinhole is formed in the inner bag 4. On the other hand, in the present embodiment, since unintentional rotation of the inner bag 4 is suppressed by increasing a frictional force between the protruding ridge 4g and the groove 3m by making the width of the protruding ridge 4g slightly larger than the width of the groove 3m, the occurrence of pinholes due to damage to the convex part is suppressed.

A value of (W1 - W2) is, for example, 0.05 to 0.5 mm (0.2 mm in the present embodiment), and specifically, for example, 0.05, 0.10, 0.15, 0.20, 0.25, 0.30, 0.35, 0.40, 0.45, 0.50 mm, and may be a range between any two of the values exemplified here. Here, the value of (W1 - W2) is a value at a portion where the interference between the protruding ridge 4g and the side wall 3m1 is strongest.

In another expression, a value of {(W1 - W2) / W2} is, for example, 3 to 33% (about 13% in the present embodiment), and this value is, for example, specifically 3, 5, 10, 15, 20, 25, 30, 33%, and may be a range between any two of the values exemplified here.

It is preferable that the protruding ridge 4g is tapered (the width becomes smaller) toward a tip 4g1 in a longitudinal direction of the protruding ridge 4g. It is more preferable that at the tip 4g1, the width of the protruding ridge 4g is the same as or smaller than the width of the groove 3m. In this case, there is an advantage that the protruding ridge 4g is easily inserted into the groove 3m.

W1 is, for example, 1.0 to 3.0 mm (1.5 mm at a portion near the tip 4g1 and 1.7 mm at a portion where the interference with the side wall 3m1 is strongest in the present embodiment), and specifically, for example, 1.0, 1.1, 1.2, 1.3, 1.4, 1.5, 1.6, 1.7, 1.8, 1.9, 2.0, 2.5, 3.0 mm, and may be a range between any two of the values exemplified here.

It is preferable that the protruding ridge 4g has a tapered shape in a direction of protruding from the inner bag body 4d (the left direction in Fig. 13D). That is, it is preferable that the width of the protruding ridge 4g becomes larger as approaching a root in the protruding direction of the protruding ridge 4g (that is, as approaching the inner bag body 4d). Further, a curved portion 4g3 that is convex inward is provided at the root of the protruding ridge 4g, and thereby, technical effects such as suppression of cracking at the protruding ridge 4g and improvement of demoldability of the protruding ridge 4g can be expected. The width of the protruding ridge 4g is widened at the curved portion 4g3, and the curved portion 4g3 interferes with the side wall 3m1. A protruding height of the protruding ridge 4g is, for example, 0.5 to 1.5 mm (1.0 mm in the present embodiment), and specifically, for example, 0.5, 0.6, 0.7, 0.8, 0.9, 1.0, 1.1, 1.2, 1.3, 1.4, 1.5 mm, and may be a range between any two of the values exemplified here.

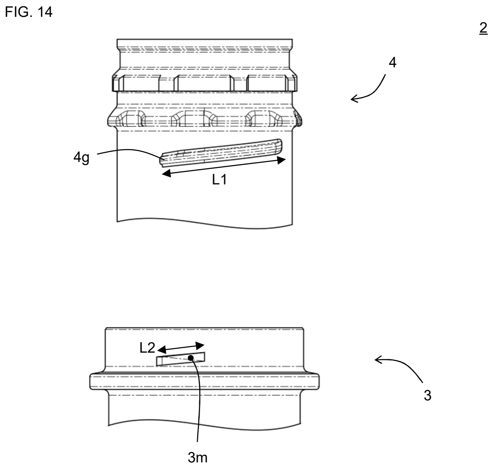

As shown in Fig. 14, a length L1 of the protruding ridge 4g in the longitudinal direction is, for example, 5 to 40 mm (about 22 mm in the present embodiment), and specifically, for example, 5, 10, 15, 20, 25, 30, 35, 40 mm, and may be a range between any two of the values exemplified here. L1/W1 is, for example, 5 to 30 (about 13 in the present embodiment), and specifically, for example, 5, 10, 15, 20, 25, 30, and may be a range between any two of the values exemplified here.

A length L2 of the groove 3m in the longitudinal direction is, for example, 3 to 30 mm (8.5 mm in the present embodiment), and preferably 3 to 15 m, and specifically, for example, 3, 4, 5, 6, 7, 8, 9, 10, 11, 12, 13, 14, 15 mm, and may be a range between any two of the values exemplified here. L2/W2 is, for example, 3 to 20, and specifically, for example, 3, 4, 5, 6, 7, 8, 9, 10, 11, 12, 13, 14, 15, 16, 17, 18, 19, 20, and may be a range between any two of the values exemplified here. Assuming that a length of an inner periphery of the outer shell 3 at a portion where the groove 3m is provided is L3, L2/L3 is preferably, for example, 0.05 to 0.30, and specifically, for example, 0.05, 0.06, 0.07, 0.08, 0.09, 0.10, 0.11, 0.12, 0.13, 0.14, 0.15, 0.20, 0.25, 0.30, and may be a range between any two of the values exemplified here.

In a state before the inner bag 4 is pulled out from the container body 2, the lower surface of the protruding ridge 4g is in contact with the upper surface of the cam rail 3l. The protruding ridge 4g and the cam rail 31 constitute a cam mechanism 31. In the present embodiment, the groove 3m is a through hole, but may be a non-through hole.

When an attempt is made to rotate the inner bag 4 counterclockwise, the rotation is restricted by the frictional force between the protruding ridge 4g and the side wall 3m1. This restriction is not strong, and when a strong torque (a torque equal to or greater than an inner plug rotation torque T2 described later) is applied to the inner bag 4, the engagement between the protruding ridge 4g and the groove 3m is released, and the inner bag 4 becomes freely rotatable with respect to the outer shell 3. Then, when the inner bag 4 is further rotated counterclockwise, the inner bag 4 moves in a direction of coming out from the container body 2 by the action of the cam mechanism 31. At this time, the inner bag 4 is twisted and reduced in diameter.

### <Rotation Direction and Torque of overcap 27 and inner plug 26>

Preferably, as shown in Fig. 15, the mouth-part mounting member 8 is a cap 8a, and includes an inner plug 26 and an overcap 27. The inner plug 26 is engaged with the mouth part 5 of the inner bag 4 in a circumferential direction and an axial direction by a snap-on method. The overcap 27 is screwed onto the inner plug 26. It is preferable that the mouth-part mounting member 8 is not engaged with the outer shell 3 in either the circumferential direction or the axial direction.

It is preferable that the overcap 27 is screwed onto the inner plug 26 by a right-hand thread. For this reason, by rotating the overcap 27 in a right-hand thread loosening direction with respect to the inner plug 26, screwing of the overcap 27 and the inner plug 26 can be released. Further, by rotating the inner plug 26 in the right-hand thread loosening direction with respect to the outer shell 3, the inner bag 4 is configured to move in a direction of coming out from the container body 2. In this way, by rotating the overcap 27 in the right-hand thread loosening direction, the overcap 27 can be removed, and by rotating the inner plug 26 in the right-hand thread loosening direction, the inner bag 4 can be lifted. Since both are operations in the same rotation direction, there is an advantage that the operation is simple.

On the other hand, in the case of the above configuration, when the container body 2 and the overcap 27 are gripped and the overcap 27 is rotated in the right-hand thread loosening direction, the overcap 27 and the inner plug 26 rotate together with respect to the container body 2 without relative rotation of the overcap 27 to the inner plug 26, and as a result, there is a risk that the inner bag 4 lifts up.

In order to suppress the occurrence of such a problem, assuming that an overcap rotation torque required to rotate the overcap 27 for the first time in the right-hand thread loosening direction with respect to the inner plug 26 is T1, and an inner plug rotation torque required to rotate the inner plug 26 for the first time in the right-hand thread loosening direction with respect to the outer shell 3 is T2, it is preferable that T2/T1 is 1.2 or more. By applying a torque equal to or greater than the overcap rotation torque T1 to the overcap 27, the overcap 27 can be rotated in the loosening direction. By applying a torque equal to or greater than the inner plug rotation torque T2 to the inner plug 26, the inner plug 26 can be rotated in the loosening direction.

In this case, when the container body 2 and the overcap 27 are gripped and the overcap 27 is rotated in the right-hand thread loosening direction, the overcap 27 rotates with respect to the inner plug 26 before the inner plug 26 rotates with respect to the outer shell 3, so that the occurrence of the above problem is suppressed. T2/T1 is, for example, 1.2 to 5, and preferably 1.5 to 3. T2/T1 is, for example, specifically 1.2, 1.5, 2.0, 2.5, 3.0, 3.5, 4.0, 4.5, 5.0, and may be in a range between any two of the values exemplified here.

T1 is, for example, 30 to 150 N·cm, and preferably 50 to 120 N·cm. T2 is, for example, 100 to 200 N·cm, and preferably 130 to 170 N·cm. T1 is, for example, specifically 30, 40, 50, 60, 70, 80, 90, 100, 110, 120, 130, 140, 150 N·cm, and may be in a range between any two of the values exemplified here. T2 is, for example, specifically 100, 110, 120, 130, 140, 150, 160, 170, 180, 190, 200 N·cm, and may be in a range between any two of the values exemplified here.

By the way, in the present embodiment, as shown in Fig. 15, the inner plug 26 includes a main body part 28 and an opening part 32. The main body part 28 and the opening part 32 are connected to each other via an easily tearable connecting part 30. The opening part 32 is provided with an engagement cylinder 32a provided with an engagement part (not shown), and an engagement cylinder 27a provided on the overcap 27 and the engagement cylinder 32a are engaged in the circumferential direction and the axial direction. According to such a configuration, by rotating the overcap 27 with respect to the main body part 28, it becomes possible to rotate the engagement cylinder 32a with respect to the main body part 28 to break the connecting part 30. By breaking the connecting part 30, the opening part 32 is separated from the main body part 28, and a flow hole is formed in the inner plug 26. The contents in the inner bag 4 can be discharged through this flow hole.

The overcap rotation torque T1 is, in the present embodiment, a torque required to separate the opening part 32 from the main body part 28 by breaking the connecting part 30. In another embodiment, instead of providing the opening part 32 in the inner plug 26, an opening ring is provided on the overcap 27 via an easily tearable connecting part, and the opening ring engages with the inner plug 26 in the circumferential direction. In such a form, a torque required to separate the opening ring from the overcap 27 by breaking a thin-walled part becomes the overcap rotation torque T1. Further, in still another embodiment, a rotation restricting structure that restricts rotation of the overcap 27 with respect to the inner plug 26 is provided, and when the restriction of rotation by the rotation restricting structure is released by a predetermined torque (for example, when rotation is restricted by contact of a convex part of the overcap 27 and a convex part of the inner plug 26, and the restriction of rotation is released by the convex part of the overcap 27 getting over the convex part of the inner plug 26), a torque required to release the restriction becomes the overcap rotation torque T1.

The inner plug rotation torque T2 is, in the present embodiment, a torque required to release the engagement between the protruding ridge 4g and the groove 3m.

Further, assuming that an overturn torque required to rotate the inner plug 26 for the first time in the right-hand thread loosening direction with respect to the inner bag 4 is T3, it is preferable that T3/T2 is 1.2 or more. This suppresses idle rotation of the inner plug 26 with respect to the inner bag 4. T3/T2 is, for example, 1.2 to 5, and preferably 1.5 to 3. T3/T2 is, for example, specifically 1.2, 1.5, 2.0, 2.5, 3.0, 3.5, 4.0, 4.5, 5.0, and may be in a range between any two of the values exemplified here or any of them or more.

T3 is, for example, 200 N·cm or more, and preferably 200 to 1000 N·cm, and specifically, for example, 200, 250, 300, 350, 400, 500, 1000 N·cm, and may be in a range between any two of the values exemplified here or any of them or more. The overturn torque T3 is, in the present embodiment, a torque required for an engagement projection (not shown) of the inner plug 26 to get over the engagement projection 4c2.

### 1-2. Method for Manufacturing double container 1

The container body 2 can be manufactured by biaxially stretch blow molding a preform 15 shown in Figs. 16 to 17. Further, the double container 1 can be manufactured by mounting the mouth-part mounting member 8 on the container body 2.

### 2. Other Embodiments

In the above embodiments, unintentional rotation of the inner bag 4 was suppressed by engaging the protruding ridge 4g constituting the cam mechanism 31 with the groove 3m provided so as to be continuous with the cam rail 31 constituting the cam mechanism 31, but unintentional rotation of the inner bag 4 may be suppressed by engaging a protruding ridge and a groove provided independently of the cam mechanism 31.

In the above embodiments, a protruding ridge provided on the inner bag 4 and a groove provided on the outer shell 3 were engaged, but unintentional rotation of the inner bag 4 may be suppressed by engaging a groove provided on the inner bag 4 and a protruding ridge provided on the outer shell 3.

### (Third Aspect)

### 1. First Embodiment

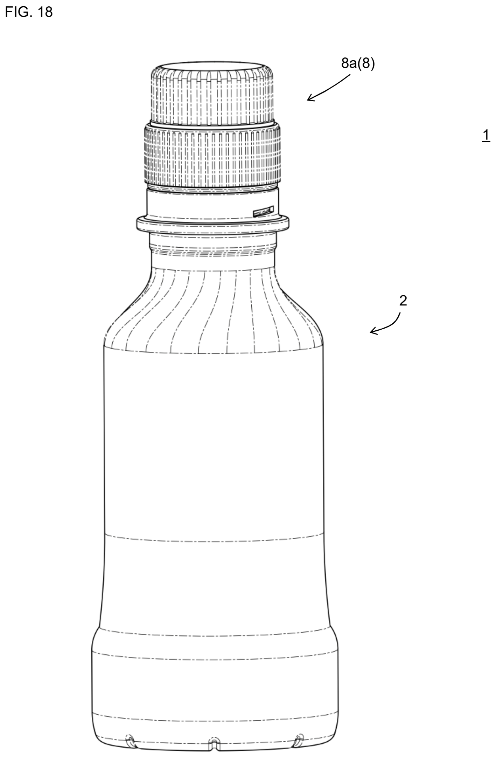

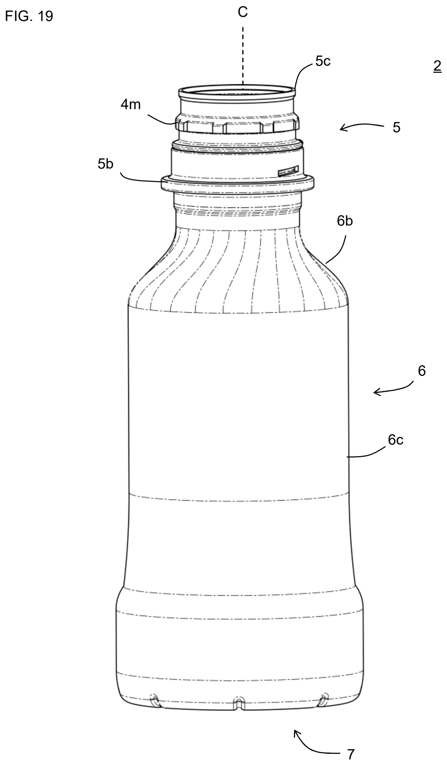

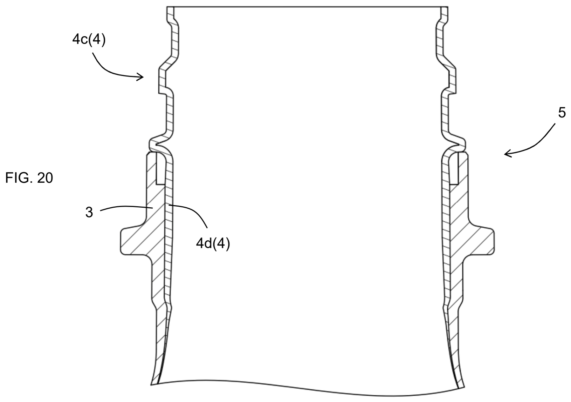

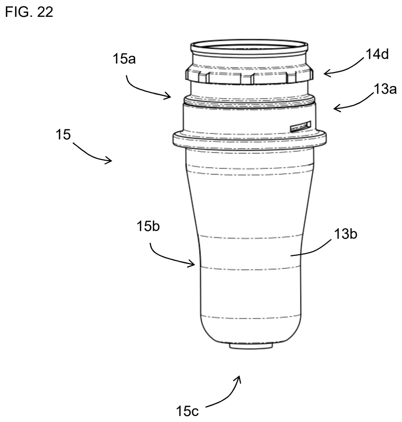

A first embodiment of the present invention will be described with reference to Figs. 18 to 27. First, a double container 1 manufacturable by a molding system 50 of the present embodiment will be described. Next, a preform 15 used in the molding system 50 will be described. Next, the molding system 50 will be described in detail. The double container 1 and the preform 15 in the present embodiment are similar to those in the first embodiment of the first aspect, and the contents described in the first embodiment of the first aspect can also be applied to the present embodiment as long as they are not contrary to the gist thereof. Hereinafter, differences will be mainly described.

### 1-1. Structure of double container 1

As shown in Figs. 18 to 20, the double container 1 includes a container body 2 and a mouth-part mounting member 8. The double container 1 is an example of a double container manufacturable by the molding system 50, and a container body of a double container having a different shape may be manufactured by the molding system 50. For example, the inner bag 4 may be made unpullable out from the container body 2.

### 1-2. preform 15

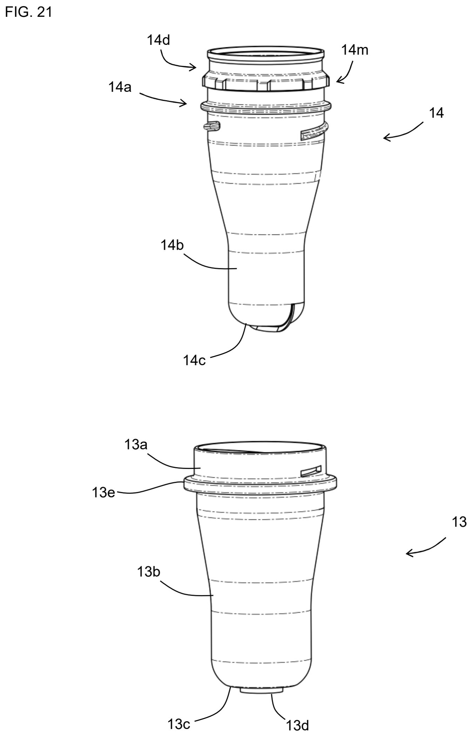

A preform 15 used in the molding system 50 will be described with reference to Figs. 21 to 22. The preform 15 includes an inner preform 14 that becomes an inner bag 4 and an outer preform 13 that becomes an outer shell 3. Figs. 21 to 22 show an example of a structure of the inner preform 14 and the outer preform 13. The molding system 50 may manufacture the container body 2 of the double container 1 using the inner preform 14 and the outer preform 13 having different structures.

### <Material and Manufacturing Method of inner preform 14, outer preform 13, and preform 15>

The inner preform 14 and the outer preform 13 can be formed of a thermoplastic resin such as polyester (e.g., PET) or polyolefin (e.g., polypropylene, polyethylene). The inner preform 14 can be formed by direct blow molding, injection molding, or the like. The outer preform 13 is formed by injection molding by an injection molding device 52 described later. In one example, the inner preform 14 is made of polyolefin (e.g., polypropylene), and the outer preform 13 is made of PET. The polyolefin used for the inner preform 14 is preferably polypropylene rather than polyethylene. This is because polypropylene has a temperature suitable for biaxial stretch blow molding closer to that of PET than polyethylene.

### 1-3. molding system 50

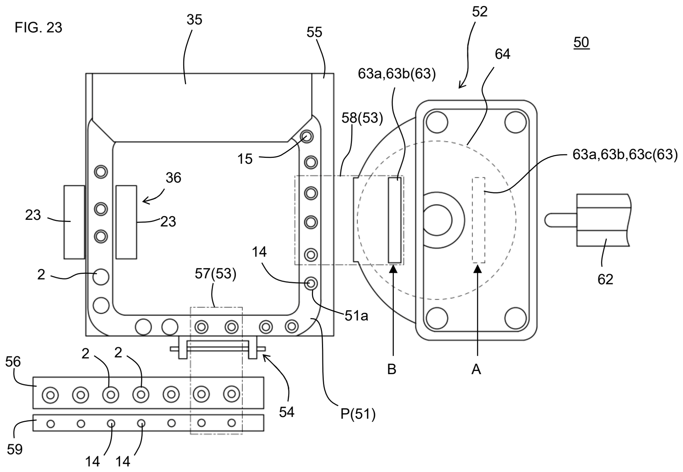

A molding system 50 according to a first embodiment of the present invention will be described with reference to Figs. 23 to 27.

### <Overview of molding system 50>

An overview of the configuration and operation of the molding system 50 will be described. The molding system 50 is a system for manufacturing a container body 2 by biaxially stretch blow molding a preform 15. The molding system 50 includes a transfer device 51, an injection molding device 52, a preform supply device 53, a heating device 35, a blow molding device 36, and a take-out device 54. The transfer device 51 is configured to convey a transfer core 51a along a circulation path P. In the present embodiment, the transfer core 51a is conveyed counterclockwise. The transfer device 51 is disposed on a machine base 55.

The preform supply device 53 is configured to supply a preform 15, which is configured by covering an inner preform 14 with an outer preform 13, to the transfer core 51a. One of the outer preform 13 and the inner preform 14 is injection-molded by the injection molding device 52, and the other of the outer preform 13 and the inner preform 14 is supplied from the outside. In the present embodiment, the outer preform 13 is injection-molded by the injection molding device 52, and the inner preform 14 is supplied from the outside.

The preform supply device 53, the heating device 35, the blow molding device 36, and the take-out device 54 are arranged along the circulation path P. The heating device 35, the blow molding device 36, and the take-out device 54 are arranged in this order. The preform supply device 53 is configured to supply the preform 15 to the transfer core 51a before the transfer core 51a reaches the heating device 35. The heating device 35 is configured to heat the preform 15. The blow molding device 36 is configured to manufacture the container body 2 by biaxially stretch blow molding the heated preform 15. The take-out device 54 is configured to remove the container body 2 from the transfer core 51a.

The preform 15 supplied by the preform supply device 53 moves along the circulation path P while being supported by the transfer core 51a, is heated by the heating device 35 on the way, and is then subjected to biaxial stretch blow molding by the blow molding device 36 to manufacture the container body 2.

The container body 2 moves from the blow molding device 36 to the take-out device 54 while being supported by the transfer core 51a, is removed from the transfer core 51a in the take-out device 54, and is carried out to a position off the circulation path P. In the present embodiment, a container discharge conveyor 56 is provided at a position adjacent to the take-out device 54, and the take-out device 54 removes the container body 2 from the transfer core 51a and moves it onto the container discharge conveyor 56. At this time, the container body 2 is preferably inverted from an inverted state to an upright state. The container discharge conveyor 56 can move the container body 2 toward the left in Fig. 23 to carry out the container body 2 and move it to a next step of manufacturing the double container 1.

In the present embodiment, the preform supply device 53 includes an inner preform supply device 57 and an outer preform supply device 58. The inner preform supply device 57 is configured to mount the inner preform 14 supplied from the outside on the transfer core 51a after the container body 2 has been removed. The outer preform supply device 58 is configured to cover the inner preform 14 in a state of being mounted on the transfer core 51a with the outer preform 13 received from the injection molding device 52.

In the present embodiment, the inner preform 14 is mounted in advance on the empty transfer core 51a from which the container body 2 has been removed, and the inner preform 14 in a state of being supported by the transfer core 51a is covered with the outer preform 13. According to such a configuration, by adding the inner preform supply device 57 to a manufacturing line for a single-layer container, manufacturing of a double container becomes possible.

Hereinafter, each device constituting the molding system 50 will be described in more detail.

### <take-out device 54>

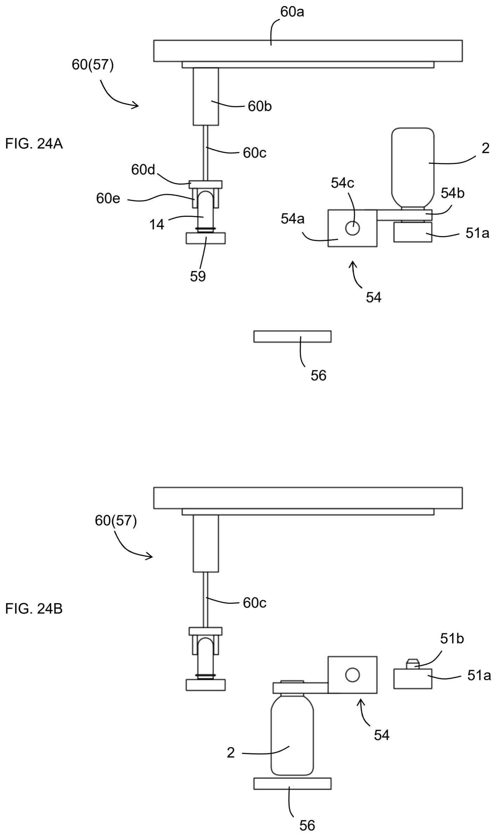

As shown in Fig. 24A, the take-out device 54 preferably includes a base 54a and a grip part 54b, and the grip part 54b is configured to be rotatable with respect to the base 54a about a rotation shaft 54c. The grip part 54b is configured by, for example, a pair of arms, and can grip the mouth part 5 of the container body 2. As shown in Figs. 24A to 24B, the grip part 54b is capable of rotating 180 degrees, and by rotating 180 degrees while gripping the container body 2 supported by the transfer core 51a in an inverted state, the container body 2 can be turned upside down and placed on the container discharge conveyor 56 in an upright state. Since the container body 2 is supported by an insertion part 51b of the transfer core 51a, when the container body 2 is removed from the transfer core 51a as shown in Fig. 24B, the insertion part 51b becomes empty.

### <inner preform supply device 57>

The inner preform supply device 57 is provided so as to overlap the take-out device 54 in a plan view, as shown in Fig. 23. As shown in Fig. 24A, the inner preform supply device 57 preferably includes a sliding transfer device 60. The sliding transfer device 60 includes a slide base 60a, a cylinder 60b, a rod 60c, a head 60d, and a grip part 60e. The cylinder 60b is slidable with respect to the slide base 60a. An amount of protrusion of the rod 60c from the cylinder 60b is variable (that is, it is extendable and retractable). The head 60d is provided at a tip of the rod 60c. The grip part 60e can grip the inner preform 14, and is configured by, for example, a pair of arms.

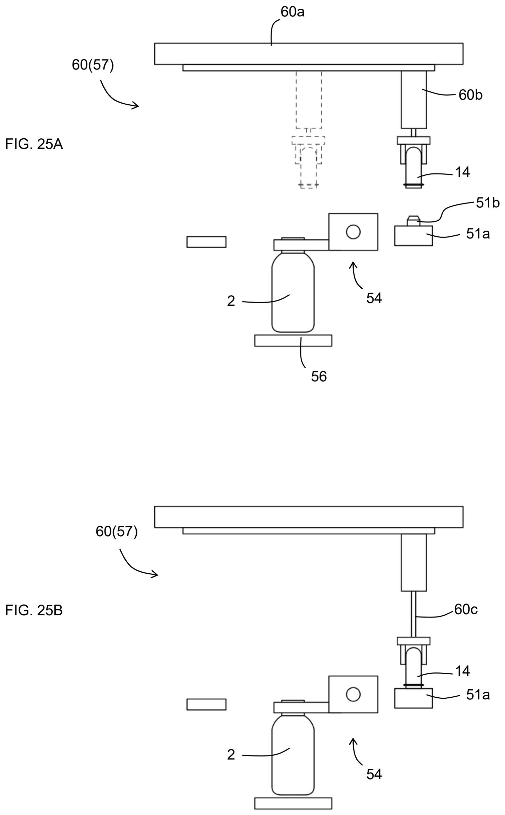

As shown in Fig. 23, when the inner preform 14 is carried into a position directly below the sliding transfer device 60 by an inner preform carry-in conveyor 59, the rod 60c extends and the grip part 60e grips the inner preform 14 in an inverted state as shown in Fig. 24A, and thereafter, as shown in Fig. 25A, in a state where the rod 60c is retracted, the cylinder 60b is moved along the slide base 60a to convey the inner preform 14 to a position directly above the transfer core 51a. In that state, as shown in Fig. 25B, the rod 60c is extended to insert the insertion part 51b into the inner preform 14, thereby mounting the inner preform 14 on the transfer core 51a.

Thereafter, the take-out device 54 and the inner preform supply device 57 are returned to the state of Fig. 24A to take out the next container body 2 and mount the inner preform 14.

The inner preform supply device 57 can be disposed at any position where the inner preform 14 can be mounted on the empty transfer core 51a, and can have any configuration. The inner preform supply device 57 can be disposed, for example, between the take-out device 54 and an outer preform supply device 58 in a plan view.

### <injection molding device 52>

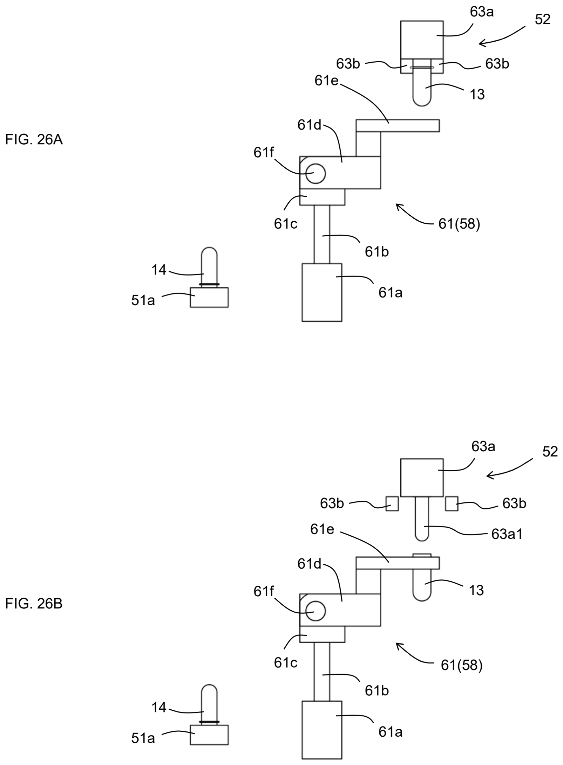

The injection molding device 52 is configured to injection-mold the outer preform 13. As shown in Fig. 23, the injection molding device 52 includes an injection device 62, an injection mold 63, and a rotating plate 64. As shown in Figs. 23 and 26, the injection mold 63 includes an injection core mold 63a, a neck cavity mold 63b, and an injection cavity mold 63c. The injection core mold 63a has a core part 63a1 that defines an inner surface shape of the outer preform 13, the neck cavity mold 63b defines outer surface shapes of a mouth part 13a and a flange part 13e of the outer preform 13, and the injection cavity mold 63c defines outer surface shapes of a body part 13b and a bottom part 13c of the outer preform 13.

The injection core mold 63a, the neck cavity mold 63b, and the injection cavity mold 63c form a cavity having a shape corresponding to the outer preform 13. The outer preform 13 can be formed by injecting a molten resin into this cavity by the injection device 62 and cooling it. In the present embodiment, the injection mold 63 includes two sets of an injection core mold 63a and a neck cavity mold 63b, and an injection cavity mold 63c, and after injection molding, by rotating the rotating plate 64, the injection core mold 63a and the neck cavity mold 63b used for molding are moved together with the just-molded outer preform 13 from a molding position A to a take-out position B. At this time, the other injection core mold 63a and neck cavity mold 63b move from the take-out position B to the molding position A. Next, the outer preform 13 at the take-out position B is delivered to an outer preform supply device 58, and at the same time, using the injection core mold 63a and the neck cavity mold 63b moved to the molding position A, and the injection cavity mold 63c, injection molding for a next cycle is performed. According to such a configuration, the outer preform 13 can be efficiently manufactured and delivered to the outer preform supply device 58. It is preferable that the injection mold 63 can simultaneously form a plurality of (three in the present embodiment) outer preforms 13 in one injection molding operation.

The neck cavity mold 63b is configured to be separable. The outer preform 13 is made undetachable from the injection core mold 63a before the neck cavity mold 63b moves away as shown in Fig. 26A, and when the neck cavity mold 63b opens and moves away from the outer preform 13 as shown in Fig. 26B, the outer preform 13 becomes detachable from the injection core mold 63a.

At the take-out position B, the outer preform 13, which has become detachable from the injection core mold 63a because the neck cavity mold 63b has opened, is delivered to the outer preform supply device 58. The injection core mold 63a and the neck cavity mold 63b retract to a position where they do not interfere with the operation of the outer preform supply device 58 after delivering the outer preform 13 to the outer preform supply device 58.

### <outer preform supply device 58>

As shown in Figs. 26 to 27, the outer preform supply device 58 is configured to cover the inner preform 14 in a state of being mounted on the transfer core 51a with the outer preform 13 received from the injection molding device 52.

As shown in Fig. 26A, the outer preform supply device 58 includes, as an example, an inverting transfer device 61. The inverting transfer device 61 includes a cylinder 61a, a rod 61b, a rotation base 61c, an extension part 61d, and a grip part 61e. An amount of protrusion of the rod 61b from the cylinder 61a is variable (that is, it is extendable and retractable). The rotation base 61c is provided at a tip of the rod 61b. The extension part 61d is rotatable with respect to the rotation base 61c about a rotation shaft 61f. The grip part 61e is provided on the extension part 61d and can grip the inner preform 14, and is configured by, for example, a pair of arms.

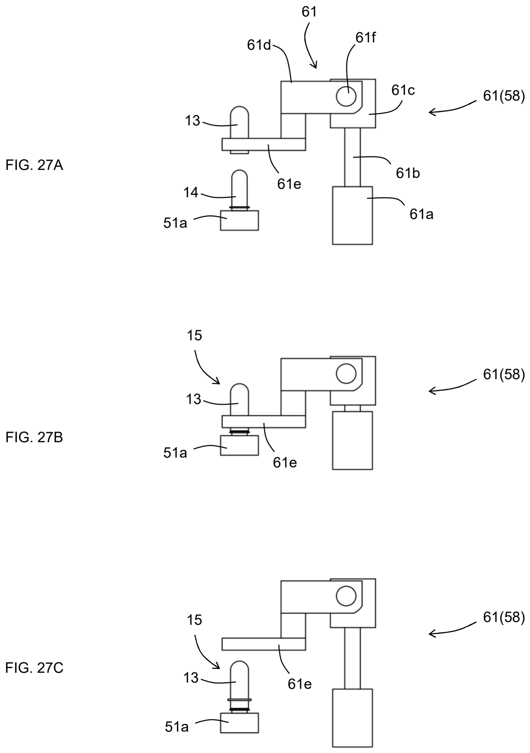

As shown in Fig. 26B, in a state where the rod 61b is extended, the grip part 61e receives and grips the outer preform 13 from the injection core mold 63a, and in that state, as shown in Fig. 27A, the extension part 61d rotates 180 degrees, and at the same time, as shown in Fig. 27B, the rod 61b retracts, whereby the inner preform 14 in a state of being supported by the transfer core 51a is covered. Next, as shown in Fig. 27C, the grip part 61e moves away from the outer preform 13, whereby the preform 15 configured by covering the inner preform 14 with the outer preform 13 is supplied to the transfer core 51a.

### <heating device 35>

The heating device 35 is configured to heat the preform 15. This softens the preform 15 and enables biaxial stretch blow molding.

### <blow molding device 36>

The blow molding device 36 is configured to manufacture the container body 2 by biaxially stretch blow molding the heated preform 15. This biaxial stretch blow molding can be performed using a pair of split molds 23 having a cavity in the shape of the container body 2.

### 2. Second Embodiment

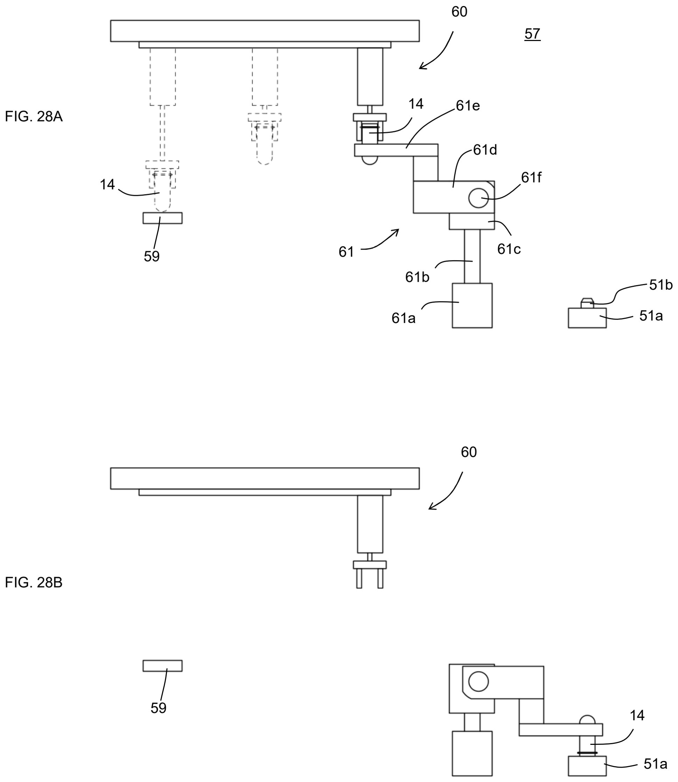

A second embodiment of the present invention will be described with reference to Fig. 28. The present embodiment is similar to the first embodiment, and the contents described in the first embodiment can also be applied to the present embodiment as long as they are not contrary to the gist thereof. The main difference is the configuration of the inner preform supply device 57. Hereinafter, differences will be mainly described.

In the present embodiment, the inner preform supply device 57, as shown in Fig. 28A, delivers the inner preform 14, which has been conveyed in an upright state using the sliding transfer device 60, to an inverting transfer device 61, and as shown in Fig. 28B, the inverting transfer device 61 inverts the inner preform 14 and mounts it on the transfer core 51a in an inverted state. The sliding transfer device 60 has the same configuration as that described above, except that the shape of the grip part 60e is suitable for conveyance in an upright state. The inverting transfer device 61 has the same configuration as the inverting transfer device 61 of the outer preform supply device 58.

As shown in Fig. 28A, in a state where the rod 61b is extended, the grip part 61e receives and grips the inner preform 14 from the sliding transfer device 60, and in that state, the extension part 61d rotates 180 degrees, and at the same time, the rod 61b retracts, whereby the inner preform 14 is mounted on the transfer core 51a.

### 3. Third Embodiment

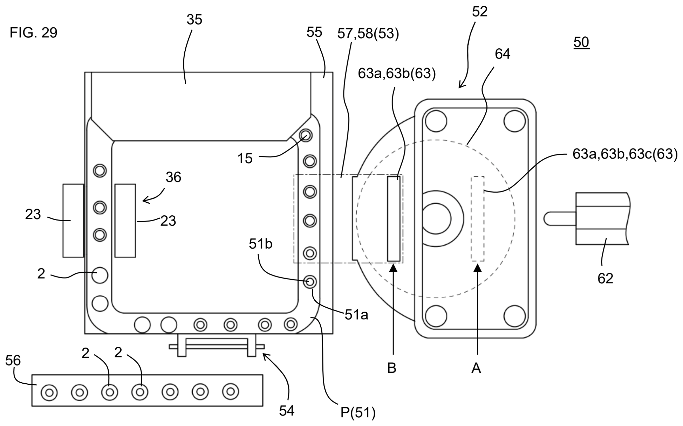

A third embodiment of the present invention will be described with reference to Figs. 29 to 31. The present embodiment is similar to the first embodiment, and the contents described in the first embodiment can also be applied to the present embodiment as long as they are not contrary to the gist thereof. The main difference is the configuration of a preform supply device 53. Hereinafter, differences will be mainly described.

In the present embodiment, the preform supply device 53 is configured to form a preform 15 in advance by covering an inner preform 14 with an outer preform 13, and to mount this preform 15 on a transfer core 51a.

The preform supply device 53 includes an inner preform supply device 57 and an outer preform supply device 58. The outer preform supply device 58 is configured to hold the outer preform 13. The inner preform supply device 57 is configured to form the preform 15 by inserting the inner preform 14 into the outer preform 13 in a state of being held by the outer preform supply device 58. The outer preform supply device 58 is configured to mount the preform 15 on the transfer core 51a. In the present embodiment, the outer preform 13 is injection-molded by an injection molding device 52, and the inner preform 14 is supplied from the outside. Therefore, the outer preform supply device 58 is configured to hold the outer preform 13 received from the injection molding device 52, and the inner preform supply device 57 is configured to form the preform 15 by inserting the inner preform 14 supplied from the outside into the outer preform 13 in a state of being held by the outer preform supply device 58. Note that a configuration may be adopted in which the outer preform 13 is supplied from the outside and the inner preform 14 is injection-molded by the injection molding device 52. Hereinafter, each configuration will be described more specifically.

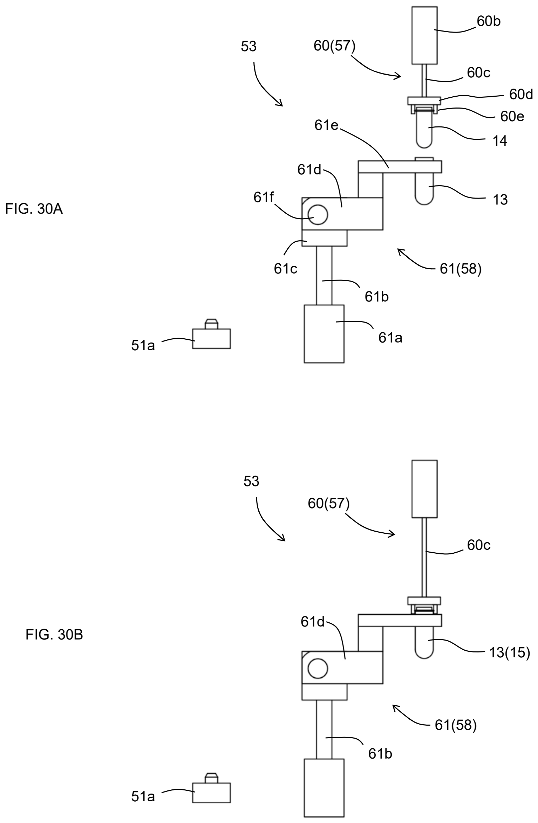

As shown in Fig. 30A, the outer preform supply device 58 includes an inverting transfer device 61 having a configuration similar to that of the first embodiment, and can receive the outer preform 13 from the injection molding device 52 and grip and hold it with a grip part 61e in a manner similar to that of the first embodiment.

As shown in Figs. 30A to 30B, the inner preform supply device 57 includes a sliding transfer device 60 having a configuration similar to that of the first embodiment. As shown in Fig. 30A, the sliding transfer device 60 conveys the inner preform 14 in an upright state to a position directly above the outer preform 13 held by the outer preform supply device 58, in a manner similar to that of the first embodiment. In that state, as shown in Fig. 30B, a rod 60c is extended to insert the inner preform 14 into the outer preform 13, thereby forming the preform 15.

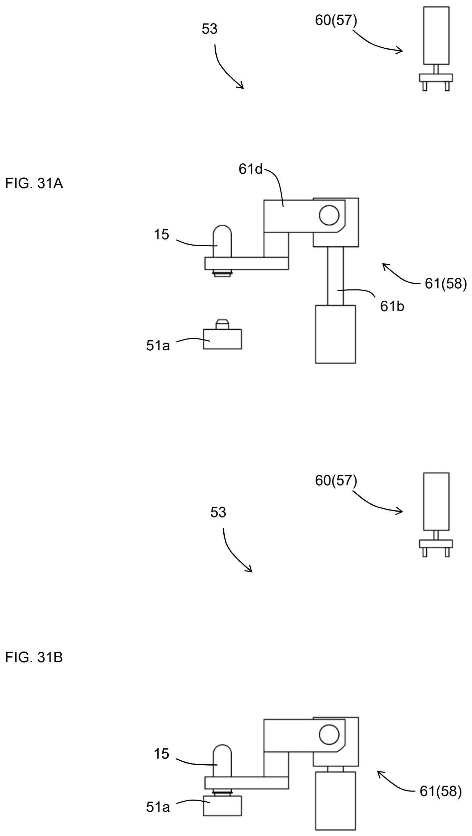

Next, as shown in Fig. 31A, the extension part 61d rotates 180 degrees, and as shown in Fig. 31B, the rod 61b retracts, whereby the preform 15 is mounted on the transfer core 51a.

### 4. Fourth Embodiment

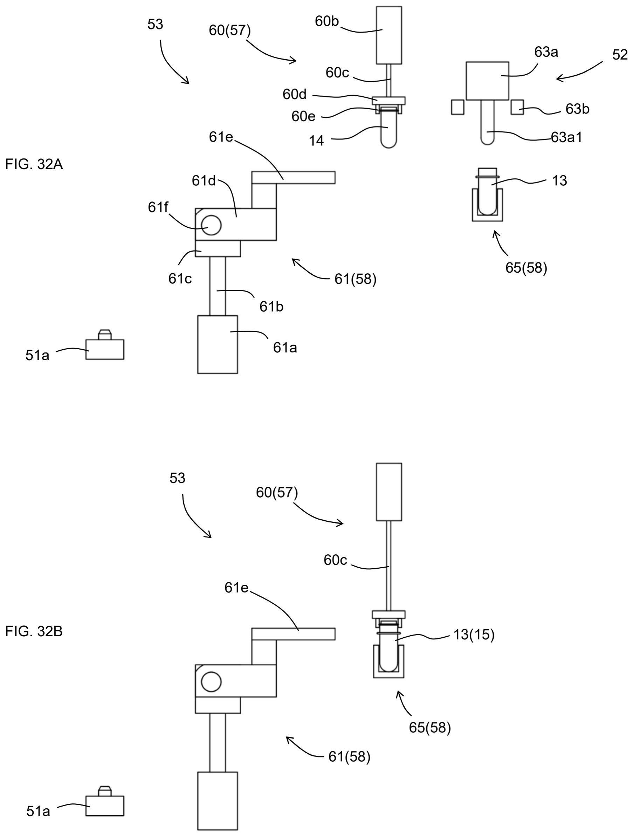

A fourth embodiment of the present invention will be described with reference to Figs. 32 to 33. This embodiment is similar to the third embodiment, and the contents described in the third embodiment are applicable to this embodiment as long as they do not contradict the spirit thereof. The main difference in this embodiment is the configuration of the outer preform supply device 58. Hereinafter, the description will focus on the differences.

As shown in Fig. 32A, in this embodiment, the outer preform supply device 58 includes an inverting transfer device 61 and an outer preform transfer device 65. The outer preform transfer device 65 receives and holds the outer preform 13 from the injection molding device 52 in the same manner as in the first embodiment. Next, the outer preform transfer device 65 moves the outer preform 13 to a position directly below the inner preform 14 transported by the inner preform supply device 57. Next, as shown in Fig. 32B, the preform 15 is formed by extending the rod 60c and inserting the inner preform 14 into the outer preform 13.

Next, as shown in Figs. 32B to 33A, the outer preform transfer device 65 moves the preform 15 and causes it to be gripped by the grip part 61e.

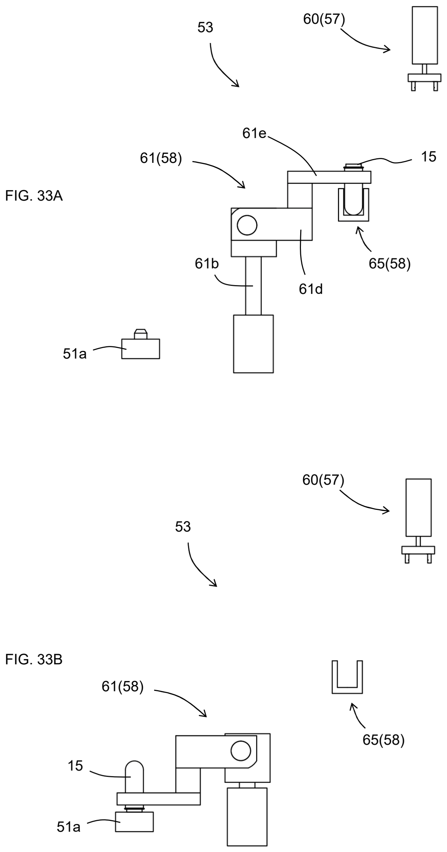

Next, as shown in Figs. 33A to 33B, the extension part 61d rotates 180 degrees, and the rod 61b retracts, whereby the preform 15 is mounted on the transfer core 51a.

### [EXAMPLE]

### (First Aspect)

### 1. Production of container body and measurement of wall thickness

### <Example 1>

By biaxially stretch blow molding the preform 15 having the shape shown in Figs. 5 to 6, a container body 2 (internal volume 300 mL) having the shape shown in Figs. 1 to 4 was obtained. The wall thickness of the inner bag 4 at the midpoint between the upper edge of the contact projection 4v and the lower edge of the engagement part 4m was about 0.8 mm. After filling the obtained container body 2 with 280 ml of water, the cap 8a shown in Fig. 1 was attached to obtain a double container 1.

The inner preform 14 was manufactured by direct blow molding of a propyleneethylene random copolymer (model: Wintec, manufactured by Japan Polypropylene Corporation). The outer preform 13 was manufactured by injection molding PET (model: titanium-based catalyst grade, manufactured by Teijin Limited) at 300°C to form the shape of an outer preform, followed by rapid cooling to 20°C. The molten PET was brought into an amorphous state by rapid cooling. The biaxially stretch blow molding was performed by heating the preform 15 to 110°C (temperature at the center in the longitudinal direction of the preform 15).

### <Example 2>

A double container 1 was manufactured in the same manner as in the first embodiment, except that the inner preform 14 shown in Fig. 9 was used instead of the inner preform 14 shown in Fig. 5.

### <Comparative Example 1>

A double container 1 was manufactured in the same manner as in the first embodiment, except that an inner preform 14 was used in which the contact projection 14v was provided so as to have a constant height over the entire circumference (that is, there was no intermediate portion 4vb serving as the reinforcing part 4w), instead of the inner preform 14 shown in Fig. 5.

### 2. Low-temperature drop test

Samples of the double container 1 of the Examples and Comparative Example were allowed to stand at 5°C for 10 hours and then dropped from a height of 1.2 m onto linoleum in an upright posture. A drop with the bottom part of the sample facing downward (vertical drop) and a drop with the sample in a horizontal state (horizontal drop) were each performed five times, and evaluation was made according to the following criteria.

When the above test was performed on 20 samples, the number of samples in which cracks occurred in the inner bag 4 was as follows.

### Example 1: 0

### Example 2: 1

### Comparative Example 1: 2

From the above results, it was found that the occurrence of cracks in the inner bag 4 can be suppressed by providing the reinforcing part 4w.

### [Reference Signs List]

1: double container, 2: container body, 3: outer shell, 3a: opening end, 31: cam rail, 3m: groove, 3m1: side wall, 4: inner bag, 4c: protruding part, 4c1: protruding cylinder, 4c2: engagement projection, 4c5: annular projection, 4c8: tapered surface, 4d: inner bag body, 4g: protruding ridge, 4g1: tip, 4g3: curved portion, 4m: engagement part, 4v: contact projection, 4v1: upper wall, 4v2: lower wall, 4v3: tip, 4v4: gap, 4va: contact protrusion, 4vb: intermediate portion, 4vc: inclined surface, 4w: reinforcing part, 5: mouth part, 5b: flange, 5c: opening end, 6: body part, 6b: shoulder part, 6c: main body part, 7: bottom part, 8: mouth-part mounting member, 8a: cap, 13: outer preform, 13a: mouth part, 13b: body part, 13c: bottom part, 13d: annular projection, 13e: flange part, 13m: groove, 14: inner preform, 14a: mouth part, 14b: body part, 14c: bottom part, 14d: protruding part, 14g: protruding ridge, 14m: engagement part, 14v: contact projection, 15: preform, 15a: mouth part, 15b: body part, 15c: bottom part, 23: split mold, 26: inner plug, 27: overcap, 27a: engagement cylinder, 28: main body part, 30: connecting part, 31: cam mechanism, 32: opening part, 32a: engagement cylinder, 33: portion, 35: heating device, 36: blow molding device, 50: molding system, 51: transfer device, 51a: transfer core, 51b: insertion part, 52: injection molding device, 53: preform supply device, 54: take-out device, 54a: base, 54b: grip part, 54c: rotation shaft, 55: machine base, 56: container discharge conveyor, 57: inner preform supply device, 58: outer preform supply device, 59: inner preform carry-in conveyor, 60: sliding transfer device, 60a: slide base, 60b: cylinder, 60c: rod, 60d: head, 60e: grip part, 61: inverting transfer device, 61a: cylinder, 61b: rod, 61c: rotation base, 61d: extension part, 61e: grip part, 61f: rotation shaft, 62: injection device, 63: injection mold, 63a: injection core mold, 63a1: core part, 63b: neck cavity mold, 63c: injection cavity mold, 64: rotating plate, 65: outer preform transfer device, A: molding position, B: take-out position, C: central axis, P: circulation path, T1: overcap rotation torque, T2: inner plug rotation torque, T3: overturn torque

## Claims

1. A double container, comprising a container body, wherein
the container body comprises an inner bag and an outer shell arranged to cover the inner bag,
the inner bag comprises a protruding part that protrudes from an opening end of the outer shell,
the protruding part is provided with a protruding cylinder and a contact projection,
the contact projection is a portion that is arranged at a position to contact the opening end and that protrudes radially outward from the protruding cylinder,
the contact projection has an upper wall and a lower wall that extend radially outward from the protruding part,
the upper wall is arranged on a side closer to an opening end of the inner bag than the lower wall, and
a reinforcing part that suppresses rotation of the upper wall with respect to the lower wall is provided.

2. The double container according to Claim 1, wherein
the contact projection comprises a plurality of contact protrusions arranged along a circumferential direction,
an intermediate portion is provided between the plurality of contact protrusions,
the intermediate portion is a portion in which an amount of protrusion from the protruding cylinder is smaller than that of the contact protrusion, or which does not protrude from the protruding cylinder, and
the reinforcing part is constituted by the intermediate portion.

3. The double container according to Claim 2, wherein
the number of the contact protrusions is 4 or 8.

4. The double container according to any one of Claims 1 to 3, wherein
the protruding part is provided with an engagement part for mounting a mouth-part mounting member at a position closer to the opening end of the inner bag than the contact projection.

5. The double container according to any one of Claims 1 to 3, wherein
the container body is a molded body manufactured by biaxially stretch blow molding a preform configured by covering an inner preform, which is formed by direct blow molding, with an outer preform.

6. A double container, comprising a container body, wherein
the container body comprises an inner bag and an outer shell arranged to cover the inner bag,
one of the inner bag and the outer shell comprises a protruding ridge, and the other of the inner bag and the outer shell comprises a groove,
the protruding ridge and the groove are configured to be engageable by relative rotation of the inner bag and the outer shell in one direction, and to be disengageable by relative rotation of the inner bag and the outer shell in the other direction,
the protruding ridge and the groove are engaged such that the protruding ridge interferes with a side wall of the groove, and
assuming that a width of the protruding ridge and a width of the groove in a natural state at a portion where the protruding ridge and the side wall interfere are W1 and W2, respectively, W1 > W2 is satisfied.

7. The double container according to Claim 6, wherein
the protruding ridge is provided on an outer peripheral surface of the inner bag, and
the groove is provided on an inner peripheral surface of the outer shell.

8. The double container according to Claim 7, wherein
a cam rail is provided on the inner peripheral surface of the outer shell,
a lower surface of the protruding ridge and an upper surface of the cam rail are inclined so as to approach the opening end side of the container body as proceeding counterclockwise when viewed from the opening end side of the container body, and
when the inner bag is rotated counterclockwise, the inner bag is configured to move in a direction of coming out from the container body by an action of a cam mechanism constituted by the protruding ridge and the cam rail.

9. The double container according to any one of Claims 6 to 8, wherein
a value of (W1 - W2) is 0.05 to 0.5 mm.

10. The double container according to any one of Claims 6 to 8, wherein
the protruding ridge is tapered toward a tip in a longitudinal direction.

11. A molding system, wherein
the molding system comprises a transfer device, an injection molding device, a preform supply device, a heating device, a blow molding device, and a container take-out device,
the transfer device is configured to convey a transfer core along a circulation path,
the preform supply device is configured to supply a preform, which is configured by covering an inner preform with an outer preform, to the transfer core,
one of the outer preform and the inner preform is injection-molded by the injection molding device, and the other of the outer preform and the inner preform is supplied from an outside,
the preform supply device, the heating device, the blow molding device, and the take-out device are arranged along the circulation path,
the heating device is configured to heat the preform,
the blow molding device is configured to manufacture a container body by biaxially stretch blow molding the heated preform, and
the take-out device is configured to remove the container body from the transfer core.

12. The molding system according to Claim 11, wherein
the preform supply device comprises an inner preform supply device and an outer preform supply device,
the inner preform supply device is configured to mount the inner preform supplied from the outside on the transfer core after the container body has been removed, and
the outer preform supply device is configured to cover the inner preform in a state of being mounted on the transfer core with the outer preform received from the injection molding device.

13. The molding system according to Claim 11, wherein
the preform supply device comprises an inner preform supply device and an outer preform supply device,
the outer preform supply device is configured to hold the outer preform received from the injection molding device,
the inner preform supply device is configured to form the preform by inserting the inner preform supplied from the outside into the outer preform in a state of being held by the outer preform supply device, and
the outer preform supply device is configured to mount the preform on the transfer core.
